# EUROPÄISCHE PATENTSCHRIFT

(11) **EP 3 902 707 B1**
(45) Veröffentlichungstag und Bekanntmachung des Hinweises auf die Patenterteilung: **27.08.2025**
(21) Anmeldenummer: 19831638.2
(22) Anmeldetag: 16.12.2019
(51) Int. Cl.: B60R 25/24, G06Q 30/06, G07F 17/00, G07C 9/00, B60R 25/20

(54) **KONZEPT ZUM BEREITSTELLEN EINES SCHLÜSSELSIGNALS ODER EINES WEGFAHRSPERRENSIGNALS FÜR EIN FAHRZEUG**
CONCEPT FOR PROVISION OF A KEY SIGNAL OR AN IMMOBILISER SIGNAL FOR A VEHICLE
CONCEPT POUR FOURNIR UN SIGNAL DE CLÉ OU UN SIGNAL D'IMMOBILISATION POUR UN VÉHICULE

(30) Priorität: 27.12.2018 DE 102018010140
(43) Veröffentlichungstag der Anmeldung: 03.11.2021
(73) Patentinhaber: VOLKSWAGEN AKTIENGESELLSCHAFT, 38440 Wolfsburg (DE)
(72) Erfinder: HUTANU, Andrei, 38102 Braunschweig (DE); MÜCKE, Maurice, 38436 Wolfsburg (DE); KOCH, Gerald, 38268 Lengede (DE); DRAGUNOW, Dmitri, 01097 Dresden (DE)
(86) Internationale Anmeldenummer: PCT/EP2019/085279
(87) Internationale Veröffentlichungsnummer: WO 2020/136029

(56) Entgegenhaltungen:
- WO-A1-2014/121811
- WO-A1-2016/054276
- WO-A1-2017/155960
- DE-A1- 102016 218 986
- JP-A- 2012 041 712
- US-A1- 2012 313 796

## Beschreibung

Die vorliegende Erfindung bezieht sich auf ein Verfahren für eine Vorrichtung für ein Fahrzeug, auf die Vorrichtung für das Fahrzeug, auf ein Verfahren und eine Vorrichtung für einen zentralen Rechner, auf ein Verfahren und eine Vorrichtung für ein Mobilgerät, und auf entsprechende Computerprogramme.

Die Nutzung von Fahrzeugen in einem Car-Sharing- (wörtliche Übersetzung: Teilen von Fahrzeugen) oder in einem Car-on-Demand-Szenario (wörtliche Übersetzung: Fahrzeug nach Bedarf) wird zunehmend beliebter. Dabei wird es einem Nutzer des Fahrzeugs häufig ermöglicht, das Fahrzeug über eine Funkkarte oder über ein Mobilgerät zu entsperren und zu starten. Um Fahrzeuge in solchen Szenarien nutzen zu können ist es meist erforderlich, dass die Fahrzeuge Sicherheitsfunktionalitäten umfassen, um eine unberechtigte Öffnung oder ein unberechtigtes Starten zu verhindern. Diese sind in manchen Fahrzeugen bereits eingebracht, in Fahrzeugen, in denen diese Szenarien in der Konzeption nicht betrachtet wurden, kann es jedoch erforderlich sein, dass entsprechende Funktionalitäten nachgerüstet werden müssen. Manche Anbieter nutzen einen Ansatz, in dem lediglich das Öffnen des Fahrzeugs über ein Mobilgerät oder eine Funkkarte geschieht, jedoch im Auto selbst ein Fahrzeugschlüssel gelagert ist. Da ein solcher Fahrzeugschlüssel im Falle eines Einbruchs auch einem Fahrzeugdieb in die Hände fallen kann, ist eine Aufgabe dieser Erfindung, ein verbessertes Konzept bereitzustellen, das eine Nutzung von Fahrzeugen in Car-Sharing-Szenarien (auch) bei Fahrzeugen ermöglicht, in denen derartige Funktionalitäten nicht von Anfang an eingeplant waren.

Aus WO 2016/054276 A1 ist bekannt, einen Schlüsselsimulator in ein Fahrzeug zu integrieren, der von einem Smartphone über das Bluetooth-Kommunikationsprotokoll gesteuert werden kann. Der Benutzer ruft in diesem Fall ein Geheimnis zur Nutzung des Schlüsselsimulators von einem Server ab und stellt dieses Geheimnis dem Schlüsselsimulator über Bluetooth bereit. Stimmt dieses Geheimnis mit einem Geheimnis überein, das in dem Schlüsselsimulator gespeichert ist, so kann der Nutzer das Fahrzeug über den Schlüsselsimulator entriegeln.

Ausführungsbeispiele schaffen dabei eine Vorrichtung für ein Fahrzeug. Diese Vorrichtung, im Folgenden auch CDIS-Box (Car on Demand Interim Solution, Fahrzeug nach Bedarf-Zwischenlösung) genannt, kann genutzt werden, um eine Zentralverriegelung und/oder eine Wegfahrsperre des Fahrzeugs zu steuern. Diese Vorrichtung umfasst einen Schlüsselchip, der ähnlich wie ein Schlüsselchip eines Fahrzeugschlüssels ausgebildet sein kann, jedoch eine (nicht manipulierbare) Firmware aufweist, die die entsprechenden Schlüsselsignale oder Wegfahrsperrensignale nur bereitstellt, wenn für die entsprechenden Signale vorher eine Freigabe durch einen zentralen Rechner über ein drahtloses Mobilkommunikationssystem erteilt wurde, also etwa durch einen Server eines Herstellers des Fahrzeugs. Ist diese erteilt worden, so wird der Schlüsselchip instruiert die entsprechenden Signale über eine Drahtlos-Kommunikationsverbindung, ähnlich wie durch einen Fahrzeugschlüssel, dem Wegfahrsperrensystem oder dem Zentralverriegelungssystem bereitzustellen. Als Auslöser kann dabei ein Mobilgerät dienen, das über eine weitere Drahtlos-Kommunikationsverbindung direkt mit der Vorrichtung kommuniziert.

Ausführungsbeispiele schaffen somit ein Verfahren für eine Vorrichtung für ein Fahrzeug. Die Vorrichtung umfasst einen Schlüsselchip. Das Verfahren umfasst ein Erhalten von Information über eine Freigabe eines Schlüsselsignals und/oder eines Wegfahrsperrensignals von einem zentralen Rechner über ein drahtlose Kommunikationsverbindung und/oder Mobilkommunikationssystem. Die Freigabe des Schlüsselsignals indiziert eine Freigabe einer Funktionalität zur Entriegelung oder Verriegelung einer Zentralverriegelung des Fahrzeugs durch den zentralen Rechner. Die Freigabe des Wegfahrsperrensignals indiziert eine Freigabe einer Funktionalität zur Deaktivierung oder Aktivierung einer Wegfahrsperre durch den zentralen Rechner. Das Verfahren umfasst ferner ein Bereitstellen eines Steuersignals für den Schlüsselchip basierend auf der Information über die Freigabe des Schlüsselsignals oder des Wegfahrsperrensignals. Das Steuersignal ist dazu ausgebildet, es dem Schlüsselchip zu ermöglichen, das Schlüsselsignal oder das Wegfahrsperrensignal zu generieren (oder bereitzustellen). Das Verfahren umfasst ferner ein Bereitstellen, durch den Schlüsselchip, des Schlüsselsignals und/oder des Wegfahrsperrensignals über eine Drahtlos-Kommunikationsverbindung für ein Zentralverriegelungssystem und/oder ein Wegfahrsperrensystem des Fahrzeugs nach Erhalt des Steuersignals.

Durch die Freigabe des Schlüsselsignals und/oder des Wegfahrsperrensignals durch den zentralen Rechner kann verhindert werden, dass der Schlüsselchip missbraucht wird. Zudem kann durch Übertragung des Schlüsselsignals oder des Wegfahrsperrensignals über eine Drahtlos-Kommunikationsverbindung die Vorrichtung auch als Nachrüstlösung in Fahrzeugen genutzt werden.

Beispielsweise kann das Schlüsselsignal über eine drahtlose Hochfrequenz-Kommunikationsverbindung übertragen werden. Das Wegfahrsperrensignal kann über eine drahtlose Niedrigfrequenz-Kommunikationsverbindung übertragen werden. Dies kann eine Übertragung der Signale über die Kommunikationsverbindungen ermöglichen, die auch von einem Fahrzeugschlüssel verwendet werden.

Dabei kann das Schlüsselsignal gleichartig zu einem drahtlosen Schlüsselsignal eines Fahrzeugschlüssels des Fahrzeugs sein. Das Wegfahrsperrensignal kann gleichartig zu einem drahtlosen Wegfahrsperrensignal des Fahrzeugschlüssels des Fahrzeugs sein. Der Schlüsselchip kann gleichartig zu einem Schlüsselchip eines Fahrzeugschlüssels des Fahrzeugs sein. Dies ermöglicht es, die Vorrichtung als Nachrüstlösung vorzusehen.

Das Verfahren umfasst ferner ein Erhalten einer Identitätsinformation eines Nutzers des Fahrzeugs von einem Mobilgerät des Nutzers über eine weitere drahtlose Kommunikationsverbindung. Information über die Freigabe des Schlüsselsignals umfasst Information über einen Nutzer, für den das Schlüsselsignal und/oder das Wegfahrsperrensignal freigegeben werden soll. Das Steuersignal wird bereitgestellt, falls die Information über den Nutzer mit der Identitätsinformation übereinstimmt. Dies kann es dem Nutzer ermöglichen, sich gegenüber der Vorrichtung (etwa der CDIS-Box) zu authentifizieren um Zugriff auf die Wegfahrsperren- und/oder die Zentralverriegelungsfunktionalität zu erlangen.

Beispielsweise kann die Information über die Freigabe des Schlüsselsignals eine Information über eine Zeitspanne umfassen, für die die Freigabe des Schlüsselsignals und/oder des Wegfahrsperrensignals erteilt wird. Das Steuersignal kann innerhalb der Zeitspanne bereitgestellt werden. Dies ermöglicht es, die Information über die Freigabe des Schlüsselsignals über mehrere Buchungszeiträume zwischenzuspeichern, um etwa einen Betrieb zu ermöglichen, falls die Vorrichtung keinen unmittelbaren Zugriff auf das drahtlose Mobilkommunikationssystem hat. In einigen Ausführungsbeispielen umfasst die Information über die Freigabe des Schlüsselsignals eine kryptografische Schlüsselinformation. Die Identitätsinformation kann einem verschlüsselten Token entsprechen. Das verschlüsselte Token kann von dem zentralen Rechner stammen. Das Verfahren kann ferner ein Verifizieren des verschlüsselten Tokens basierend auf der kryptografischen Schlüsselinformation umfassen. Durch Bereitstellung des verschlüsselten Tokens durch den zentralen Rechner kann dem Mobilgerät des Nutzers ein Zugriff erteilt werden, ohne dass eine Manipulation des Mobilgeräts befürchtet werden muss. Ist der verschlüsselte Token ferner von dem Mobilgerät signiert, so kann auch ein Diebstahl des Tokens ohne Belang sein.

Das Verfahren kann ferner ein Kommunizieren mit einem Mobilgerät des Nutzers über eine weitere drahtlose Kommunikationsverbindung umfassen. Das Verfahren kann ein Bereitstellen eines Zugriffs auf Funktionen der Zentralverriegelung für das Mobilgerät basierend auf der Information über die Freigabe des Schlüsselsignals umfassen. Alternativ oder zusätzlich kann das Verfahren ein Bereitstellen eines Zugriffs auf Funktionen einer elektrischen Wegfahrsperre für das Mobilgerät basierend auf der Information über die Freigabe des Wegfahrsperrensignals umfassen. Alternativ oder zusätzlich kann das Verfahren ein Bereitstellen von Daten eines Fahrzeugkommunikationssystems des Fahrzeugs für das Mobilgerät umfassen. Dies ermöglicht es dem Nutzer, das Fahrzeug über das Mobilgerät in einem Car-on-Demand-Szenario zu nutzen.

Beispielsweise kann das Wegfahrsperrensignal dem Wegfahrsperrensystem des Fahrzeugs bereitgestellt werden, um eine Wegfahrsperre des Fahrzeugs zu deaktivieren. Das Schlüsselsignal kann dem Zentralverriegelungssystem des Fahrzeugs bereitgestellt werden, um zumindest eine Klappe des Fahrzeugs zu Ent- oder Verriegeln. Das Wegfahrsperrensignal kann dem Wegfahrsperrensystem des Fahrzeugs bereitgestellt werden, um ein Starten des Fahrzeugs zu ermöglichen. Dies ermöglicht die Nutzung der Vorrichtung als Nachrüstlösung in einem Car-on-Demand-Szenario.

In zumindest einigen Ausführungsbeispielen wird das Steuersignal durch ein Kontrollmodul der Vorrichtung dem Schlüsselchip bereitgestellt. Eine Übertragung des Steuersignals durch das Kontrollmodul kann kryptografisch gesichert sein. Dies ermöglicht es, das Kontrollmodul und den Schlüsselchip so kryptografisch zu koppeln, dass eine Generierung des Steuersignals durch eine andere Entität, etwa durch einen Angreifer, erschwert oder verunmöglicht wird.

Ausführungsbeispiele schaffen ferner ein Verfahren für einen zentralen Rechner. Das Verfahren umfasst ein Bereitstellen einer Information über eine Freigabe eines Schlüsselsignals oder eines Wegfahrsperrensignals für eine Vorrichtung eines Fahrzeugs über ein drahtloses Mobilkommunikationssystem. Die Freigabe des Schlüsselsignals indiziert eine Freigabe einer Funktionalität zur Entriegelung oder Verriegelung einer Zentralverriegelung des Fahrzeugs durch den zentralen Rechner. Alternativ oder zusätzlich indiziert die Freigabe des Wegfahrsperrensignals eine Freigabe einer Funktionalität zur Deaktivierung oder Aktivierung einer Wegfahrsperre durch den zentralen Rechner. Die Freigabe bezieht sich auf ein Schlüsselsignal oder ein Wegfahrsperrensignal, das über eine Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist. Durch die Freigabe des Schlüsselsignals oder des Wegfahrsperrensignals durch den zentralen Rechner kann verhindert werden, dass der Schlüsselchip missbraucht wird. Zudem kann durch Übertragung des Schlüsselsignals oder des Wegfahrsperrensignals über eine Drahtlos-Kommunikationsverbindung die Vorrichtung auch als Nachrüstlösung in Fahrzeugen genutzt werden.

Beispielsweise kann die Information über die Freigabe des Schlüsselsignals oder des Wegfahrsperrensignals eine kryptografische Schlüsselinformation umfassen. Das Verfahren kann ferner ein Bereitstellen eines verschlüsselten Tokens für ein Mobilgerät eines Nutzers des Fahrzeugs umfassen. Das verschlüsselte Token und die kryptografische Schlüsselinformation können auf demselben kryptografischen Schlüssel basieren. Das verschlüsselte Token kann dem Mobilgerät zur Weitergabe an die Vorrichtung des Fahrzeugs bereitgestellt werden. Durch Bereitstellung des verschlüsselten Tokens durch den zentralen Rechner kann dem Mobilgerät des Nutzers ein Zugriff erteilt werden, ohne dass eine Manipulation des Mobilgeräts befürchtet werden muss. Ist der verschlüsselte Token ferner von dem Mobilgerät signiert, so kann auch ein Diebstahl des Tokens ohne Belang sein.

Ausführungsbeispiele schaffen ferner ein Verfahren für ein Mobilgerät. Das Verfahren umfasst ein Bereitstellen einer Identitätsinformation eines Nutzers eines Fahrzeugs von dem Mobilgerät des Nutzers für eine Vorrichtung des Fahrzeugs über eine drahtlose Kommunikationsverbindung. Die Identitätsinformation wird der Vorrichtung des Fahrzeugs zum Vergleich mit einer Information über einen Nutzer bereitgestellt, für den ein Schlüsselsignal oder ein Wegfahrsperrensignal freigegeben werden soll, so dass das Schlüsselsignal oder das Wegfahrsperrensignal über eine Drahtlos-Kommunikationsverbindung innerhalb des Fahrzeugs einem Wegfahrsperrenmodul oder einem Zentralverriegelungssystem des Fahrzeugs bereitgestellt wird, falls die Information über den Nutzer mit der Identitätsinformation übereinstimmt. Durch die Freigabe des Schlüsselsignals oder des Wegfahrsperrensignals durch den zentralen Rechner kann verhindert werden, dass der Schlüsselchip missbraucht wird. Zudem kann durch Übertragung des Schlüsselsignals oder des Wegfahrsperrensignals über eine Drahtlos-Kommunikationsverbindung die Vorrichtung auch als Nachrüstlösung in Fahrzeugen genutzt werden. Durch Bereitstellen der Identifikationsinformation kann sich der Nutzer des Mobilgeräts gegenüber der Vorrichtung (etwa der CDIS Box) authentifizieren, um Zugriff auf das Fahrzeug zu erlangen.

Beispielsweise kann die Identitätsinformation einem verschlüsselten Token entsprechen. Das Verfahren kann ferner ein Empfangen des verschlüsselten Tokens von einem zentralen Rechner zur Weitergabe an das Fahrzeug umfassen. Durch Bereitstellung des verschlüsselten Tokens durch den zentralen Rechner kann dem Mobilgerät des Nutzers ein Zugriff erteilt werden, ohne dass eine Manipulation des Mobilgeräts befürchtet werden muss. Ist der verschlüsselte Token ferner von dem Mobilgerät signiert, so kann auch ein Diebstahl des Tokens ohne Belang sein.

Ausführungsbeispiele schaffen ferner ein Computerprogramm zur Durchführung eines der Verfahren, wenn das Computerprogramm auf einem Computer, einem Prozessor, oder einer programmierbaren Hardwarekomponente abläuft.

Ausführungsbeispiele schaffen ferner eine Vorrichtung für ein Fahrzeug. Die Vorrichtung umfasst einen Schlüsselchip. Die Vorrichtung umfasst zumindest eine Schnittstelle, ausgebildet zur Kommunikation über ein drahtloses Mobilkommunikationssystem. Die Vorrichtung umfasst ein Kontrollmodul, ausgebildet zum Erhalten von Information über eine Freigabe eines Schlüsselsignals oder eines Wegfahrsperrensignals von einem zentralen Rechner über das drahtlose Mobilkommunikationssystem. Die Freigabe des Schlüsselsignals indiziert eine Freigabe einer Funktionalität zur Entriegelung oder Verriegelung einer Zentralverriegelung des Fahrzeugs durch den zentralen Rechner indiziert. Alternativ oder zusätzlich indiziert die Freigabe des Wegfahrsperrensignals eine Freigabe einer Funktionalität zur Deaktivierung oder Aktivierung einer Wegfahrsperre durch den zentralen Rechner. Das Kontrollmodul ist ausgebildet zum Bereitstellen eines Steuersignals für den Schlüsselchip basierend auf der Information über die Freigabe des Schlüsselsignals oder des Wegfahrsperrensignals. Das Steuersignal ist dazu ausgebildet, es dem Schlüsselchip zu ermöglichen, das Schlüsselsignal oder das Wegfahrsperrensignal zu generieren (oder bereitzustellen). Der Schlüsselchip ist ausgebildet, um das Schlüsselsignal und/oder das Wegfahrsperrensignal über eine Drahtlos-Kommunikationsverbindung für ein Zentralverriegelungssystem und/oder ein Wegfahrsperrensystem des Fahrzeugs nach Erhalt des Steuersignals bereitzustellen.

Ausführungsbeispiele schaffen ferner eine Vorrichtung für einen zentralen Rechner. Die Vorrichtung umfasst zumindest eine Schnittstelle, ausgebildet zur Kommunikation über ein drahtloses Mobilkommunikationssystem. Die Vorrichtung umfasst ferner ein Kontrollmodul, ausgebildet zum Bereitstellen einer Information über eine Freigabe eines Schlüsselsignals oder eines Wegfahrsperrensignals für eine Vorrichtung eines Fahrzeugs über das drahtloses Mobilkommunikationssystem. Die Freigabe des Schlüsselsignals indiziert eine Freigabe einer Funktionalität zur Entriegelung oder Verriegelung einer Zentralverriegelung des Fahrzeugs durch den zentralen Rechner. Alternativ oder zusätzlich indiziert die Freigabe des Wegfahrsperrensignals eine Freigabe einer Funktionalität zur Deaktivierung oder Aktivierung einer Wegfahrsperre durch den zentralen Rechner. Die Freigabe bezieht sich auf ein Schlüsselsignal oder ein Wegfahrsperrensignal, das über eine Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist.

Ausführungsbeispiele schaffen ferner eine Vorrichtung für ein Mobilgerät. Die Vorrichtung umfasst zumindest eine Schnittstelle, ausgebildet zur Kommunikation über eine drahtlose Kommunikationsverbindung. Die Vorrichtung umfasst ein Kontrollmodul ausgebildet zum Bereitstellen einer Identitätsinformation eines Nutzers eines Fahrzeugs von dem Mobilgerät des Nutzers für eine Vorrichtung des Fahrzeugs über die drahtlose Kommunikationsverbindung. Die Identitätsinformation wird der Vorrichtung des Fahrzeugs zum Vergleich mit einer Information über einen Nutzer bereitgestellt, für den ein Schlüsselsignal oder ein Wegfahrsperrensignal freigegeben werden soll, so dass das Schlüsselsignal oder das Wegfahrsperrensignal über eine Drahtlos-Kommunikationsverbindung innerhalb des Fahrzeugs einem Wegfahrsperrenmodul oder einem Zentralverriegelungssystem des Fahrzeugs bereitgestellt wird, falls die Information über den Nutzer mit der Identitätsinformation übereinstimmt.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fign. 1a und 1b: zeigen Flussdiagramme von Ausführungsbeispielen eines Verfahrens für eine Vorrichtung für ein Fahrzeug;
- Fig. 1c: zeigt ein Blockdiagramm eines Ausführungsbeispiels einer Vorrichtung für ein Fahrzeug;
- Fig. 2a: zeigt ein Flussdiagramm eines Ausführungsbeispiels eines Verfahrens für einen zentralen Rechner;
- Fig. 2b: zeigt ein Blockdiagramm eines Ausführungsbeispiels einer Vorrichtung für einen zentralen Rechner;
- Fig.: 3a zeigt ein Flussdiagramm eines Ausführungsbeispiels eines Verfahrens für ein Mobilgerät;
- Fig. 3b: zeigt ein Blockdiagramm eines Ausführungsbeispiels einer Vorrichtung für ein Mobilgerät;
- Fig. 4: illustriert einen Fluss von Informationen in einem Schlüssel-System;
- Fign. 5a und 5b: zeigen einen schematischen Fluss von Informationen in Schlüsselchips;
- Fig. 6: zeigt eine Integration eines Schlüsselchips in einer CDIS-Box; und
- Fig. 7: zeigt ein Ausführungsbeispiel einer Anbindung eines Schlüsselchips.

Verschiedene Ausführungsbeispiele werden nun ausführlicher unter Bezugnahme auf die beiliegenden Zeichnungen beschrieben, in denen einige Ausführungsbeispiele dargestellt sind.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

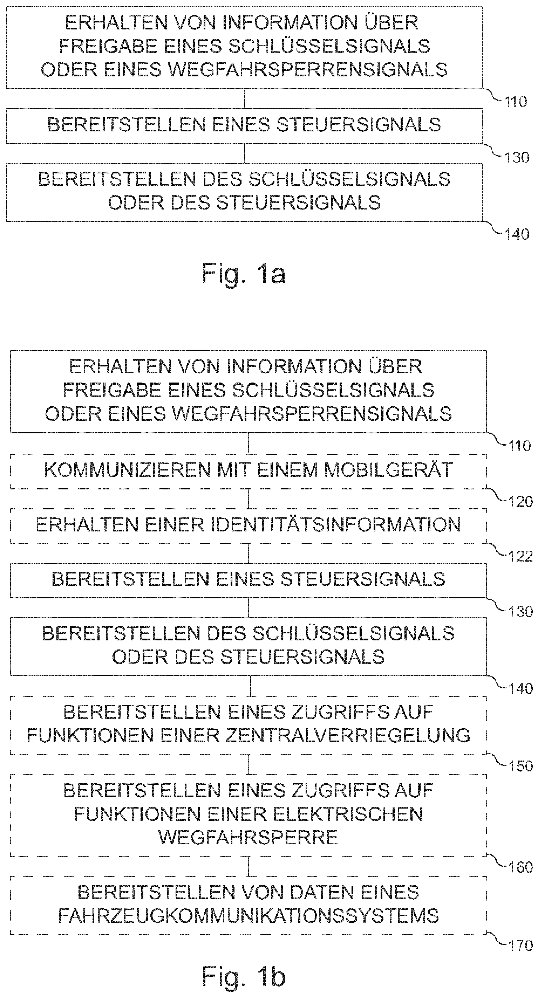

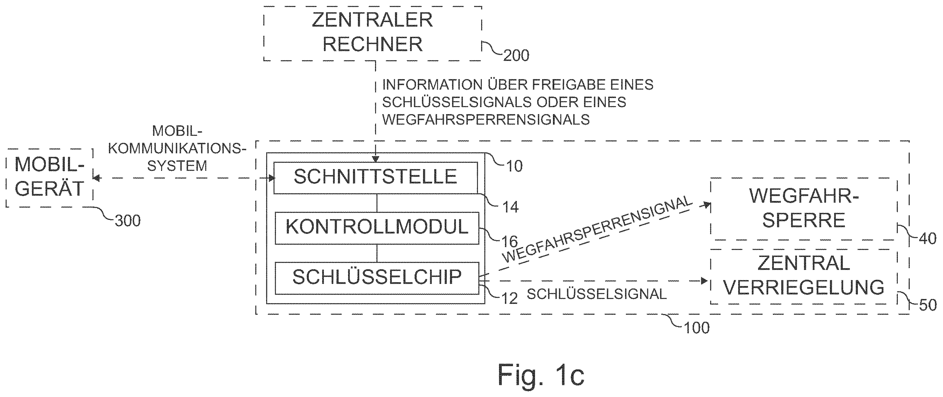

Die Fign. 1a und 1b zeigen Flussdiagramme von Ausführungsbeispielen eines Verfahrens für eine Vorrichtung 10 für ein Fahrzeug. Die Vorrichtung 10 umfasst einen Schlüsselchip 12. Die Vorrichtung 10 mit dem Schlüsselchip 12 wird in Fig. 1c eingeführt. Das Verfahren umfasst ein Erhalten 110 von Information über eine Freigabe eines Schlüsselsignals oder eines Wegfahrsperrensignals von einem zentralen Rechner über ein drahtloses Mobilkommunikationssystem. Die Freigabe des Schlüsselsignals indiziert eine Freigabe einer Funktionalität zur Entriegelung oder Verriegelung einer Zentralverriegelung des Fahrzeugs durch den zentralen Rechner. Zusätzlich oder alternativ indiziert die Freigabe des Wegfahrsperrensignals eine Freigabe einer Funktionalität zur Deaktivierung oder Aktivierung einer Wegfahrsperre durch den zentralen Rechner. Das Verfahren umfasst ferner ein Bereitstellen 130 eines Steuersignals für den Schlüsselchip 12 basierend auf der Information über die Freigabe des Schlüsselsignals oder des Wegfahrsperrensignals. Das Steuersignal ist dazu ausgebildet, es dem Schlüsselchip zu ermöglichen, das Schlüsselsignal oder das Wegfahrsperrensignal zu generieren (oder bereitzustellen). Das Wegfahrsperren-Geheimnis befindet sich beispielsweise im Schlüsselchip und wird, nur wenn autorisiert/freigegeben durch den zentralen Rechner, freigegeben. Das Verfahren umfasst ferner ein Bereitstellen 140, durch den Schlüsselchip, des Schlüsselsignals und/oder des Wegfahrsperrensignals über eine Drahtlos-Kommunikationsverbindung für ein Zentralverriegelungssystem 50 und/oder ein Wegfahrsperrensystem 40 des Fahrzeugs nach Erhalt des Steuersignals. Auch das Zentralverriegelungssystem 50 und das Wegfahrsperrensystem 40 werden in Fig. 1c gezeigt.

Fig. 1c zeigt ein Blockdiagramm eines Ausführungsbeispiels einer (entsprechenden) Vorrichtung 10 für ein Fahrzeug 100. Die Vorrichtung 10 umfasst einen Schlüsselchip 12. Die Vorrichtung 10 umfasst zumindest eine Schnittstelle 14, ausgebildet zur Kommunikation über ein drahtloses Mobilkommunikationssystem. Die Vorrichtung 10 umfasst ein Kontrollmodul 16, ausgebildet zum Erhalten von Information über eine Freigabe eines Schlüsselsignals oder eines Wegfahrsperrensignals von einem zentralen Rechner 200 über das drahtlose Mobilkommunikationssystem. Das Kontrollmodul 16 ist mit dem Schlüsselchip 12 und mit der zumindest einen Schnittstelle 14 gekoppelt. Das Kontrollmodul 16 kann ausgebildet sein, um das Verfahren auszuführen, etwa unter Nutzung der zumindest einen Schnittstelle und des Schlüsselchips. Das Kontrollmodul ist ferner ausgebildet zum Bereitstellen eines Steuersignals für den Schlüsselchip 12 basierend auf der Information über die Freigabe des Schlüsselsignals oder des Wegfahrsperrensignals. Das Steuersignal ist dazu ausgebildet, es dem Schlüsselchip zu ermöglichen, das Schlüsselsignal oder das Wegfahrsperrensignal zu generieren (oder bereitzustellen). Der Schlüsselchip 12 ist ausgebildet, das Schlüsselsignal und/oder das Wegfahrsperrensignal über eine Drahtlos-Kommunikationsverbindung für ein Zentralverriegelungssystem 50 und/oder ein Wegfahrsperrensystem 40 des Fahrzeugs 100 nach Erhalt des Steuersignals bereitzustellen. Fig. 1c zeigt ferner das Fahrzeug 100 umfassend die Vorrichtung 10, das Zentralverriegelungssystem 50 und das Wegfahrsperrensystem 40.

Die folgende Beschreibung bezieht sich sowohl auf das Verfahren der Fign. 1a und 1b als auch auf die Vorrichtung 10 der Fig. 1c.

Zumindest Teile der Erfindung beziehen sich auf die Vorrichtung 10. In zumindest manchen Ausführungsbeispielen ist die Vorrichtung 10 eine Car-on-Demand-Nachrüst-Vorrichtung (etwa eine CDIS-Box) für ein Fahrzeug. Die Vorrichtung 10 kann eine Zugangsvorrichtung 10 sein. Die Vorrichtung 10 kann es einem Nutzer eines Car-on-Demand-Dienstes ermöglichen, das Fahrzeug zu entriegeln und in Betrieb zu nehmen.

Dazu umfasst das Verfahren das Erhalten 110 (etwa Empfangen) der Information über die Freigabe des Schlüsselsignals oder des Wegfahrsperrensignals von dem zentralen Rechner über das drahtlose Mobilkommunikationssystem. In zumindest manchen Ausführungsbeispielen ist das drahtlose Mobilkommunikationssystem ein zelluläres Mobilkommunikationssystem. Das drahtloses Mobilkommunikationssystem kann beispielsweise ein Mobilfunksystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution (LTE), Long Term Evolution Advanced (LTE-A), und ein Mobilfunksystem der 5. Generation (5G) sein. In manchen Ausführungsbeispielen kann die Information über die Freigabe des Schlüsselsignals über ein Mobilgerät 300 erhalten werden. Das Mobilgerät 300 kann die Information über die Freigabe des Schlüsselsignals etwa zwischenspeichern oder eine Verbindung zu dem zentralen Rechner für die Vorrichtung 10 bereitstellen. Der zentrale Rechner kann beispielsweise einem Server (Dienstrechner) oder einer Gruppe von Servern entsprechen. In zumindest manchen Ausführungsbeispielen wird der Begriff "zentraler Rechner" für eine Gruppe von Rechnern (Servern) verwendet, die zusammenwirken, um die Information über die Freigabe des Schlüsselsignals bereitzustellen.

Diese Gruppe von Rechnern kann beispielsweise einen Server eines Herstellers des Fahrzeugs, einen Server eines Anbieters des Car-on-Demand-Dienstes, und/oder eine zentrale vertrauenswürdige Instanz umfassen. Dabei kann in zumindest einigen Ausführungsbeispielen die Information über die Freigabe durch ein Zusammenwirken des Servers des Herstellers, des Servers des Anbieters und der zentralen vertrauenswürdigen Instanz bereitgestellt werden, etwa durch den Server des Herstellers des Fahrzeugs.

Die Freigabe des Schlüsselsignals indiziert eine Freigabe einer Funktionalität zur Entriegelung oder Verriegelung einer Zentralverriegelung des Fahrzeugs durch den zentralen Rechner. Auch indiziert die Freigabe des Wegfahrsperrensignals eine Freigabe einer Funktionalität zur Deaktivierung oder Aktivierung einer Wegfahrsperre durch den zentralen Rechner. Dabei kann sich die Freigabe etwa auf die Vorrichtung 10 beziehen. So kann die Vorrichtung 10 durch die Freigabe des Schlüsselsignals ermächtigt werden, das Schlüsselsignal (etwa unter bestimmten Bedingungen) bereitzustellen (analog für das Wegfahrsperrensignal). Liegt keine Freigabe des Schlüsselsignals vor, so kann es der Vorrichtung 10 (etwa dem Schlüsselchip 12) untersagt sein, das Schlüsselsignal bereitzustellen (analog für das Wegfahrsperrensignal).

Das Verfahren umfasst ferner das Bereitstellen 130 des Steuersignals für den Schlüsselchip 12 basierend auf der Information über die Freigabe des Schlüsselsignals oder des Wegfahrsperrensignals. In zumindest einigen Ausführungsbeispielen wird das Steuersignal durch das Kontrollmodul der Vorrichtung dem Schlüsselchip bereitgestellt 130. Eine Übertragung des Steuersignals kann durch das Kontrollmodul kryptografisch gesichert sein. In anderen Worten kann das Steuersignal kryptografisch gesichert sein. Das Kontrollmodul kann ausgebildet sein, um das Steuersignal kryptografisch gesichert zu dem Schlüsselchip zu übertragen. So können beispielsweise das Kontrollmodul und der Schlüsselchip auf der gleichen Platine angeordnet sein. Bei der Übertragung des Steuersignals über Leiterbahnen der Platine kann das Steuersignal kryptografisch gesichert sein. Beispielsweise können Steuerbefehle, die über das Steuersignal übertragen werden, kryptografisch verschlüsselt oder kryptografisch signiert sein. Das Steuersignal kann etwa basierend auf einem kryptografischen Geheimnis kryptografisch gesichert sein. Beispielsweise kann das Kontrollmodul ein Trusted Platform Module (TPM, Modul für eine vertrauenswürdige Plattform) oder ein Hardware-Sicherheitsmodul (HSM) umfassen oder Zugriff auf ein solches Modul haben. Das TPM/HSM kann das kryptografische Geheimnis umfassen.

Das Steuersignal ist dazu ausgebildet, es dem Schlüsselchip zu ermöglichen, das Schlüsselsignal oder das Wegfahrsperrensignal zu generieren. So kann beispielsweise der Schlüsselchip ausgebildet sein, um das Schlüsselsignal und/oder das Wegfahrsperrensignal nur zu generieren, falls dem Schlüsselchip ein (authentisches/gültiges) Steuersignal bereitgestellt wird. Authentisch bedeutet in diesem Zusammenhang, dass das Steuersignal wirklich von der Vorrichtung bzw. dem Kontrollmodul stammt. Gültig bedeutet in diesem Zusammenhang, dass ein Sicherheitsmerkmal des Steuersignals, etwa die kryptografische Sicherung, intakt ist. Beispielsweise kann der Schlüsselchip einen Speicher für ein Wegfahrsperrengeheimnis und/oder für ein Zentralverriegelungsgeheimnis umfassen. Der Schlüsselchip kann eine Sicherheitsfunktionalität umfassen, die dem Schlüsselchip einen Zugriff auf das Wegfahrsperrengeheimnis und/oder das Zentralverriegelungsgeheimnis (nur) gewährt, falls dem Schlüsselchip ein (authentisches/gültiges) Steuersignal bereitgestellt wird. Der Schlüsselchip kann ausgebildet sein, um dem Schlüsselchip einen Zugriff auf das Wegfahrsperrengeheimnis und/oder das Zentralverriegelungsgeheimnis (nur) zu gewähren, falls dem Schlüsselchip ein (authentisches/gültiges) Steuersignal bereitgestellt wird.

Das Verfahren umfasst ferner ein Bereitstellen 140, durch den Schlüsselchip, des Schlüsselsignals oder des Wegfahrsperrensignals über eine Drahtlos-Kommunikationsverbindung für ein Zentralverriegelungssystem 50 oder ein Wegfahrsperrensystem 40 des Fahrzeugs nach Erhalt des Steuersignals. Im Allgemeinen werden Wegfahrsperrensignale und Schlüsselsignale durch einen Fahrzeugschlüssel in unterschiedlichen Frequenzbändern übertragen. So werden Schlüsselsignale häufig im Hochfrequenz-Bereich (auch engl. Radio Frequency, RF) um 400 MHz übertragen, während Wegfahrsperrensignale häufig im Niedrigfrequenz-Bereich (auch engl. LF, Low Frequency) um 100 kHz übertragen werden. Somit kann das Schlüsselsignal durch den Schlüsselchip über eine drahtlose Hochfrequenz-Kommunikationsverbindung übertragen werden. Das Wegfahrsperrensignal kann durch den Schlüsselchip über eine drahtlose Niedrigfrequenz-Kommunikationsverbindung übertragen werden. Beide Signale können dabei den Signalen entsprechen, die durch einen entsprechenden Fahrzeugschlüssel übertragen werden. So kann das Schlüsselsignal gleichartig zu einem drahtlosen Schlüsselsignal eines Fahrzeugschlüssels des Fahrzeugs sein (also etwa diesem entsprechen). Das Wegfahrsperrensignal kann gleichartig zu einem drahtlosen Wegfahrsperrensignal des Fahrzeugschlüssels des Fahrzeugs sein (also etwa diesem entsprechen). "Gleichartig" kann sich in diesem Zusammenhang etwa auf eine Frequenz, eine Codierung und/oder eine Sicherheitsfunktionalität des Schlüsselsignals und/oder des Wegfahrsperrensignals beziehen. Zudem kann der Schlüsselchip gleichartig zu einem Schlüsselchip eines Fahrzeugschlüssels des Fahrzeugs sein, etwa einem solchen entsprechen. Dabei kann die Firmware oder Programmierung des Schlüsselchips eine Ausnahme sein. Die Firmware oder die Programmierung des Schlüsselchips kann den Schlüsselchip dazu ausbilden, das Schlüsselsignal und/oder das Wegfahrsperrensignal nur bereitzustellen, falls dem Schlüsselchip ein (authentisches/gültiges) Steuersignal bereitgestellt wird.

Der Schlüsselchip ist dazu ausgebildet, um das Schlüsselsignal und/oder das Wegfahrsperrensignal nach Erhalt des Steuersignals bereitzustellen. Der Schlüsselchip kann ferner dazu ausgebildet sein, um das Steuersignal zu prüfen, um eine Authentizität oder Gültigkeit des Steuersignals zu bestimmen. Der Schlüsselchip kann etwa die Authentizität oder Gültigkeit des Steuersignals basierend auf der kryptografischen Sicherung des Steuersignals bestimmen. Der Schlüsselchip kann ausgebildet sein, um das Schlüsselsignal und/oder das Wegfahrsperrensignal nach Erhalt des Steuersignals bereitzustellen, falls das Steuersignal authentisch/gültig ist.

Das Schlüsselsignal und/oder das Wegfahrsperrensignal wird den jeweiligen Systemen bereitgestellt, um Zugriff auf verschiedene Funktionalitäten des Fahrzeugs zu erhalten. So kann das Wegfahrsperrensignal dem Wegfahrsperrensystem 40 des Fahrzeugs bereitgestellt 140 werden, um eine Wegfahrsperre des Fahrzeugs zu deaktivieren (oder zu aktivieren). Das Schlüsselsignal kann dem Zentralverriegelungssystem 50 des Fahrzeugs bereitgestellt 140 werden, um zumindest eine Klappe (etwa eine Tür oder eine Kofferraumklappe) des Fahrzeugs zu Ent- oder Verriegeln. Das Wegfahrsperrensignal kann dem Wegfahrsperrensystem 40 des Fahrzeugs bereitgestellt 140 werden, um ein (schlüsselfreies) Starten des Fahrzeugs zu ermöglichen. Wird das Wegfahrsperrensignal einem Wegfahrsperrensystem eines Fahrzeugs, das einen mechanischen Schlüssel zum Starten benötigt, bereitgestellt, so kann für das Starten ein mechanischer Schlüsselbart (ohne Elektronik) genutzt werden.

Grundsätzlich kann das Wegfahrsperrensystem und/oder das Zentralverriegelungssystem durch den zentralen Rechner alleine ferngesteuert werden, d.h. der zentrale Rechner kann die Vorrichtung instruieren, das Fahrzeug zu entsperren oder die Wegfahrsperre zu deaktivieren. In zumindest manchen Ausführungsbeispielen umfasst das Verfahren ferner eine direkte Kommunikation der Vorrichtung mit einem Mobilgerät eines (potentiellen) Nutzers des Fahrzeugs. Der zentrale Rechner kann dabei die Freigabe des Schlüsselsignal für diesen Nutzer erteilen, und der Nutzer kann sich über sein Mobilgerät (etwa ein Smartphone (programmierbares Telefon), Tablet oder ein Weareable wie etwa eine Smartwatch (eine programmierbare Uhr)) gegenüber dem Fahrzeug authentifizieren und die freigegebene Funktionalität in Anspruch nehmen.

So kann das Verfahren ferner, wie in Fig. 1b gezeigt, ein Kommunizieren 120 mit einem Mobilgerät 300 des Nutzers über eine weitere drahtlose Kommunikationsverbindung umfassen. Die weitere drahtlose Kommunikationsverbindung kann beispielsweise einer drahtlosen Nahfunkkommunikationsverbindung entsprechen. Beispielsweise kann die drahtlose Kommunikationsverbindung auf Bluetooth, etwa Niedrigenergie-Blueooth (Bluetooth Low Energy, BTLE) oder auf Nahfeldkommunikation (Near Field Communication, NFC) basieren. Das Verfahren kann ferner, ein Bereitstellen 150 eines Zugriffs auf Funktionen der Zentralverriegelung für das Mobilgerät basierend auf der Information über die Freigabe des Schlüsselsignals umfassen. Die Funktionen der Zentralverriegelung können beispielsweise ein Verriegeln und/oder ein Entriegeln des Fahrzeugs umfassen. Das Verfahren kann ferner ein Bereitstellen 160 eines Zugriffs auf Funktionen einer elektrischen Wegfahrsperre für das Mobilgerät basierend auf der Information über die Freigabe des Wegfahrsperrensignals umfassen. Die Funktionen der Wegfahrsperre können beispielsweise ein Deaktivieren oder ein Aktivieren einer Wegfahrsperre und/oder ein Aktivieren eines Schlüssellosen Fahrens umfassen. Das Verfahren kann ferner ein Bereitstellen 170 von Daten eines Fahrzeugkommunikationssystems des Fahrzeugs für das Mobilgerät umfassen. Dabei können die Daten des Fahrzeugkommunikationssystems lediglich ausgelesen und nicht verändert werden. Die Daten des Fahrzeugkommunikationssystems können beispielsweise Daten eines CAN (Controller Area Network, Fahrzeugbus für Datendes Fahrzeugs dienen) des Fahrzeugs entsprechen.

Damit der Benutzer über sein Mobilgerät Zugriff auf das Fahrzeug erhält kann sich dieser dem Fahrzeug gegenüber authentifizieren. Die Authentifizierung des Mobilgeräts des Nutzers kann beispielsweise auf einer Identitätsinformation des Nutzers basieren. Das Verfahren kann ferner, wie in Fig. 1b gezeigt, ein Erhalten 122 der Identitätsinformation des Nutzers des Fahrzeugs von einem Mobilgerät des Nutzers über die weitere drahtlose Kommunikationsverbindung umfassen. Die Information über die Freigabe des Schlüsselsignals kann eine Information über einen Nutzer umfasst, für den das Schlüsselsignal und/oder das Wegfahrsperrensignal freigegeben werden soll. Das Steuersignal (und damit auch das Schlüsselsignal/Wegfahrsperrensignal) kann bereitgestellt 130 werden, falls die Information über den Nutzer mit der Identitätsinformation übereinstimmt.

Um diese Authentifizierung des Mobilgeräts des Nutzers abzusichern kann beispielsweise ein verschlüsseltes Token als Identitätsinformation genutzt werden. Das verschlüsselte Token kann beispielsweise von dem zentralen Rechner stammen, etwa von einer zentralen vertrauenswürdigen Instanz des zentralen Rechners, also etwa von diesem basierend auf einem kryptografischen Schlüssel generiert werden. Alternativ kann das Token von der zentralen vertrauenswürdigen Instanz des zentralen Rechners generiert werden und durch den Server des Fahrzeugherstellers oder eines Dienstleisters des zentralen Rechners direkt der Vorrichtung für das Fahrzeug bereitgestellt werden, etwa in Fällen, in denen das Mobilgerät des Nutzers nicht direkt mit der Vorrichtung kommuniziert, sondern über den Server des Fahrzeugherstellers oder des Dienstleisters. Die Information über die Freigabe des Schlüsselsignals kann eine kryptografische Schlüsselinformation umfassen. Die Vorrichtung (etwa das Kontrollmodul) kann nun die kryptografische Schlüsselinformation nutzen, um den verschlüsselten Token zu verifizieren. Das Verifizieren des verschlüsselten Tokens kann beispielsweise ein Überprüfen, ob die kryptografische Schlüsselinformation und der verschlüsselte Token von dem gleichen kryptografischen Schlüssel (etwa dem privaten Schlüssel des zentralen Rechners) abstammt, umfassen. In anderen Worten kann das Verfahren ferner ein Verifizieren des verschlüsselten Tokens basierend auf der kryptografischen Schlüsselinformation umfassen.

Zudem kann die Freigabe nur für eine bestimmte Zeit erteilt werden. So kann etwa in einem Car-Sharing-Szenario, in dem das Fahrzeug über eine Abfolge von mehreren, kurzzeitigen Buchungen, den Nutzern zugeordnet wird, die Freigabe im Voraus für eine Mehrzahl von Buchungen erteilt werden, etwa um dem Fall Rechnung zu tragen, in dem das Fahrzeug dann, wenn der Nutzer Zugriff erlangen möchte, keine Verbindung zu dem zentralen Rechner herstellen kann. In anderen Worten kann die Freigabe des Schlüsselsignals oder des Wegfahrsperrensignals im Voraus von dem zentralen Rechner erhalten werden, etwa vor Erhalten der Identitätsinformation von dem Mobilgerät. So kann die Information über die Freigabe des Schlüsselsignals Information über eine Zeitspanne umfassen, für die die Freigabe des Schlüsselsignals und/oder des Wegfahrsperrensignals (im Voraus) erteilt wird. Das Steuersignal (und damit auch das Wegfahrsperrensignal und/oder das Schlüsselsignal) kann (lediglich) innerhalb der Zeitspanne bereitgestellt werden. Nach Ablauf der Zeitspanne kann das Verfahren ferner ein Aktivieren der Wegfahrsperre umfassen, etwa um das Fahrzeug nach Ende des Mietvorgangs stillzulegen. Dazu kann auch eine Kulanzzeit gewährt werden. Alternativ kann das Verfahren ferner ein Anfordern der Freigabe des Schlüsselsignals oder des Wegfahrsperrensignals basierend auf der erhaltenen Identitätsinformation umfassen, etwa nach Erhalten der Identitätsinformation.

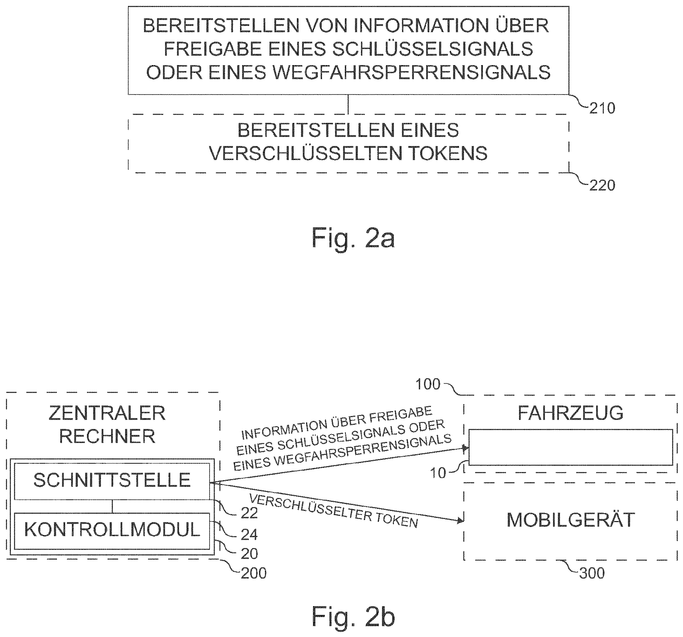

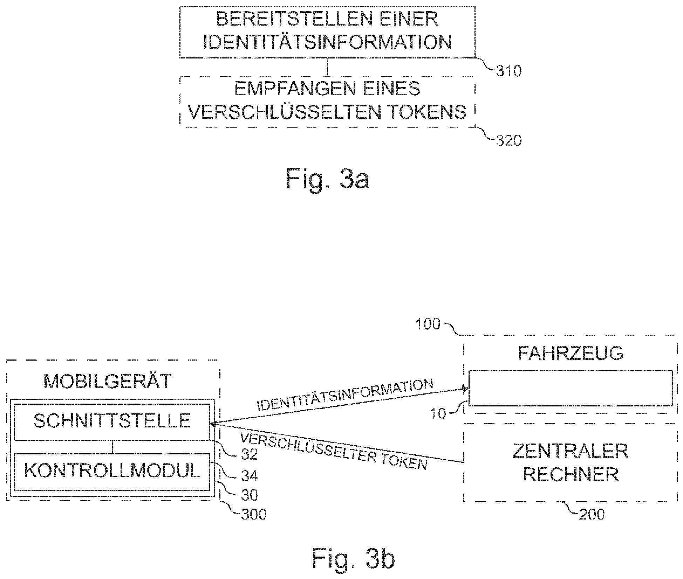

In Ausführungsbeispielen kann das Kontrollmodul 16 (und/oder auch Kontrollmodule 24; 34, die im Zusammenhang mit den Fign. 2b oder 3b eingeführt werden) einem beliebigen Controller oder Prozessor oder einer programmierbaren Hardwarekomponente entsprechen.

Beispielsweise kann das Kontrollmodul 16; 24; 34auch als Software realisiert sein, die für eine entsprechende Hardwarekomponente programmiert ist. Insofern kann das Kontrollmodul 16; 24; 34als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16; 24; 34 denkbar.

Die zumindest eine Schnittstelle 14 (und/oder auch Schnittstellen 22; 32, die im Zusammenhang mit den Fign. 2b oder 3b eingeführt werden) kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. In zumindest einigen Ausführungsbeispielen können die Schnittstellen 14; 22 und 32 ausgebildet sein, um über das drahtlose Mobilkommunikationssystem zu kommunizieren. Zudem können die Schnittstellen 14 und 32 ausgebildet sein, um über die weitere drahtlose Kommunikationsverbindung (etwa die drahtlose Nahfunkkommunikationsverbindung) zu kommunizieren.

Mehr Details und Aspekte des Verfahrens und der Vorrichtung 10 werden in Verbindung mit dem Konzept oder Beispielen genannt, die vorher oder nachher (z.B. Fig. 2a bis 7) beschrieben werden. Die Vorrichtung 10 oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben werden.

Eine weitere Komponente der Erfindung stellt der zentrale Server dar. Dieser stellt der Vorrichtung 10 die Freigabe für das Schlüsselsignal und/oder des Wegfahrsperrensignal bereit, kann jedoch auch mit dem Mobilgerät kommunizieren. Die Freigabe des Schlüsselsignals wird dann durch die Vorrichtung umgesetzt, etwa durch einen Hauptprozessor (das Kontrollmodul) der Vorrichtung, in Verbindung mit einem Trusted Platform Module (TPM, Modul für eine sichere Plattform) der Vorrichtung, und in Verbindung mit dem Schlüsselchip, der die Umsetzung der Freigabe prozessiert und das Schlüsselsignal und/oder das Wegfahrsperrensignal prozessiert.

Fig. 2a zeigt ein Flussdiagramm eines Ausführungsbeispiels eines Verfahrens für einen zentralen Rechner 200. Das Verfahren umfasst ein Bereitstellen 210 einer Information über eine Freigabe für das Schlüsselsignal oder das Wegfahrsperrensignal für eine Vorrichtung 10 eines Fahrzeugs 100 über ein drahtloses Mobilkommunikationssystem (etwa die in Zusammenhang mit den Fign. 1a bis 1c eingeführte Information über die Freigabe des Schlüsselsignals oder des Wegfahrsperrensignals). Der zentrale Rechner stellt dabei in zumindest einigen Ausführungsbeispielen lediglich ein Freigabesignal für die Vorrichtung bereit, die eigentlich Freigabe geschieht durch die Vorrichtung, etwa durch ein Zusammenspiel des Kontrollmoduls der Vorrichtung mit einem TPM der Vorrichtung und mit dem Schlüsselchip der Vorrichtung. Die Freigabe des Schlüsselsignals indiziert eine Freigabe einer Funktionalität zur Entriegelung oder Verriegelung einer Zentralverriegelung des Fahrzeugs durch den zentralen Rechner 200. Zusätzlich oder alternativ indiziert die Freigabe des Wegfahrsperrensignals eine Freigabe einer Funktionalität zur Deaktivierung oder Aktivierung einer Wegfahrsperre durch den zentralen Rechner. Die Freigabe bezieht sich auf ein Schlüsselsignal oder ein Wegfahrsperrensignal, das über eine Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist (etwa auf das Schlüsselsignal und/oder das Wegfahrsperrensignal, die in Zusammenhang mit den Fign. 1a bis 1c eingeführt werden).

Fig. 2b zeigt ein Blockdiagramm eines Ausführungsbeispiels einer (entsprechenden) Vorrichtung 20 für einen zentralen Rechner 200. Fig. 2b zeigt ferner den zentralen Rechner 200 mit der Vorrichtung 20. Fig. 2b zeigt ferner ein System aus dem zentralen Rechner 200 mit der Vorrichtung 20, dem Fahrzeug 100 mit der Vorrichtung 10 und optional einem Mobilgerät 300 mit einer Vorrichtung 30, die in Zusammenhang mit den Fign. 3a und 3b eingeführt wird. Die Vorrichtung 20 umfasst zumindest eine Schnittstelle 22, ausgebildet zur Kommunikation über ein drahtloses Mobilkommunikationssystem (etwa das drahtlose Mobilkommunikationssystem, das in Verbindung mit den Fign. 1a bis 1c eingeführt wird). Die Vorrichtung 20 umfasst ein Kontrollmodul 24, das mit der zumindest einen Schnittstelle gekoppelt ist. Das Kontrollmodul 24 kann ausgebildet sein, um das Verfahren auszuführen, etwa unter Nutzung der zumindest einen Schnittstelle. Das Kontrollmodul 24 ist ausgebildet zum Bereitstellen der Information über die Freigabe eines Schlüsselsignals oder des Wegfahrsperrensignals für die Vorrichtung 10 des Fahrzeugs über das drahtlose Mobilkommunikationssystem.

Die folgende Beschreibung bezieht sich sowohl auf das Verfahren der Fig. 2a als auch auf die Vorrichtung 20 der Fig. 2b.

Das Verfahren umfasst das Bereitstellen 210 (etwa Übertragen) der Information über die Freigabe eines Schlüsselsignals oder des Wegfahrsperrensignals. Die Freigabe bezieht sich auf ein Schlüsselsignal oder ein Wegfahrsperrensignal, das über die Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist. Dabei kann es sich bei dem Schlüsselsignal und/oder dem Wegfahrsperrensignal um das Schlüsselsignal und/oder das Wegfahrsperrensignal handeln, die im Zusammenhang mit den Fign. 1a bis 1c eingeführt wurden. Beispielseise kann der zentrale Rechner die Information über die Freigabe eines Schlüsselsignals oder des Wegfahrsperrensignals basierend auf einer Anfrage eines Servers eines Car-Sharing-Anbieters oder basierend auf einer Anfrage eines Mobilgeräts 300 eines Nutzers bereitstellen.

In zumindest manchen Ausführungsbeispielen kann die Information über die Freigabe des Schlüsselsignals oder des Wegfahrsperrensignals eine kryptografische Schlüsselinformation umfassen. Das Verfahren kann ferner ein Bereitstellen 220 eines verschlüsselten Tokens für ein Mobilgerät 300 eines Nutzers des Fahrzeugs umfassen, etwa über das drahtlose Mobilkommunikationssystem. Das verschlüsselte Token und die kryptografische Schlüsselinformation auf demselben kryptografischen Schlüssel basieren. In anderen Worten kann das Verfahren ein Generieren der kryptografischen Schlüsselinformation und des verschlüsselten Tokens basierend auf dem kryptografischen Schlüssel umfassen. Der kryptografische Schlüssel kann beispielsweise ein privater Schlüssel des zentralen Rechners sein. Das verschlüsselte Token kann dem Mobilgerät zur Weitergabe an die Vorrichtung des Fahrzeugs bereitgestellt werden. Der verschlüsselte Token kann beispielsweise von dem Mobilgerät nicht entschlüsselt werden. Das Mobilgerät kann den verschlüsselte Token jedoch signieren und dann signiert der Vorrichtung 10 für das Fahrzeug weitergeben.

Mehr Details und Aspekte des Verfahrens und der Vorrichtung 20 werden in Verbindung mit dem Konzept oder Beispielen genannt, die vorher oder nachher (z.B. Fig. 1a bis 1c, 3a bis 7) beschrieben werden. Die Vorrichtung 20 oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben werden.

Die Erfindung bezieht sich ferner in manchen Ausführungsbeispielen auf ein Mobilgerät.

Fig. 3a zeigt ein Flussdiagramm eines Ausführungsbeispiels eines Verfahrens für ein Mobilgerät 300. Das Verfahren umfasst ein Bereitstellen 310 einer Identitätsinformation eines Nutzers eines Fahrzeugs von dem Mobilgerät des Nutzers für eine Vorrichtung des Fahrzeugs über eine drahtlose Kommunikationsverbindung. Die Identitätsinformation wird der Vorrichtung 10 des Fahrzeugs zum Vergleich mit einer Information über einen Nutzer bereitgestellt. Für den Nutzer soll durch die Vorrichtung 10 basierend auf der Identitätsinformation ein Schlüsselsignal oder ein Wegfahrsperrensignal freigegeben werden, falls die Information über den Nutzer mit der Identitätsinformation übereinstimmt. Wird das Schlüsselsignal oder das Wegfahrsperrensignal freigegeben, so wird das Schlüsselsignal oder das Wegfahrsperrensignal über eine Drahtlos-Kommunikationsverbindung innerhalb des Fahrzeugs einem Wegfahrsperrenmodul oder einem Zentralverriegelungssystem des Fahrzeugs bereitgestellt.

Fig. 3b zeigt ein Blockdiagramm eines Ausführungsbeispiels einer (entsprechenden) Vorrichtung 30 für das Mobilgerät. Die Vorrichtung 30 umfasst zumindest eine Schnittstelle 32, ausgebildet zur Kommunikation über eine drahtlose Kommunikationsverbindung (etwa die weitere drahtlose Kommunikationsverbindung, die in Zusammenhang mit den Fign. 1a bis 1c vorgestellt wird). Die Vorrichtung 30 umfasst ein Kontrollmodul 34, das mit der zumindest einen Schnittstelle gekoppelt ist. Das Kontrollmodul 34 kann ausgebildet sein, um das Verfahren von Fig. 3a auszuführen. Das Kontrollmodul 34 ist ausgebildet zum Bereitstellen einer Identitätsinformation eines Nutzers eines Fahrzeugs 100 von dem Mobilgerät des Nutzers für eine Vorrichtung 10 des Fahrzeugs über die drahtlose Kommunikationsverbindung. Die Identitätsinformation wird der Vorrichtung des Fahrzeugs zum Vergleich mit einer Information über einen Nutzer bereitgestellt, für den ein Schlüsselsignal oder ein Wegfahrsperrensignal freigegeben werden soll, so dass das Schlüsselsignal oder das Wegfahrsperrensignal über eine Drahtlos-Kommunikationsverbindung innerhalb des Fahrzeugs einem Wegfahrsperrenmodul oder einem Zentralverriegelungssystem des Fahrzeugs bereitgestellt wird, falls die Information über den Nutzer mit der Identitätsinformation übereinstimmt.

Die folgende Beschreibung bezieht sich sowohl auf das Verfahren der Fig. 3a und die Vorrichtung 30 der Fig. 3b.

In manchen Ausführungsbeispielen kann die Identitätsinformation, wie im Zusammenhang mit den Fign. 1a bis 2b ausgeführt, einem verschlüsselten Token entsprechen. Das Verfahren kann ferner ein Empfangen 320 (oder Erhalten) des verschlüsselten Tokens von einem zentralen Rechner 200 zur Weitergabe an das Fahrzeug umfassen (etwa durch Bereitstellen/Übermitteln des verschlüsselten Tokens als Identitätsinformation an die Vorrichtung 10 des Fahrzeugs). In manchen Ausführungsbeispielen kann das Verfahren ferner ein Signieren des verschlüsselten Tokens basierend auf einem privaten Schlüssel des Mobilgeräts umfassen. Das Verfahren kann ferner ein Bereitstellen der signierten Fassung des verschlüsselten Tokens an die Vorrichtung 10 des Fahrzeugs 100 umfassen.

Mehr Details und Aspekte des Verfahrens und der Vorrichtung 30 werden in Verbindung mit dem Konzept oder Beispielen genannt, die vorher oder nachher (z.B. Fig. 1a bis 2b, bis 7) beschrieben werden. Die Vorrichtung 10 oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben werden.

Zumindest manche Ausführungsbeispiele beziehen sich auf eine CDIS-Box (Car On Demand Interim Solution - Fahrzeug-auf-Nachfrage Zwischenlösung, eine Telematik-Lösung). Diese kann etwa der Vorrichtung 10 entsprechen, die im Zusammenhang mit den Figuren 1a bis 1c eingeführt wurde.

Manche Fahrzeuge, etwa ältere Fahrzeuge, verfügen nicht über die Hardware, die nötig ist, um eine sichere Car Sharing-Nutzung der Fahrzeuge zu gewährleisten. Da aus rechtlicher Sicht Umstritten ist, ob sich ein vollfunktionsfähiger Schlüssel im Fahrzeug befinden darf, liefert die CDIS-Box eine Telematik-Lösung, die einen Schlüssel erst im Zusammenspiel und Authentifizierung durch Backend (etwa dem zentralen Rechner 200), Smartphone (dem Mobilgerät 300) und Fahrzeug-Kommunikation (CDIS-Box) freigibt.

Die CDIS-Box ermöglicht verschiedene Nutzererfahrungen (auch engl. Customter Journeys), u.a. für den Dienst von öffentlichem Car-Sharing. Dabei werden die Nutzer in einem ersten Schritt auf den Car-Sharing Dienst über eine Webseite oder über soziale Medien aufmerksam gemacht, etwa durch aufnehmen eines QR (engl. Quick Response, Schnelle Antwort)-Kodes durch ein Mobilgerät. Der Benutzer kann sich nun über ein Smartphone oder eine Webseite für den Dienst registrieren und notwendige Dokumente zur Verifikation und Aktivierung der Mitgliedschaft hochladen. In einem dritten Schritt können die Benutzer ein Fahrzeug lokalisieren und reservieren (buchen) und einen Pfand über einen Zahlungsdienstleister, wie etwa PayPal oder AliPay, leisten. Zudem kann eine Personalisierung durchgeführt werden. Sobald die Miete beginnt können personalisierte Einstellungen, etwa für das Infotainment (Amalgam aus Information und Entertainment (Unterhaltung), für eine Vor-Klimatisierung des Fahrzeugs etc., können in das Fahrzeug übertragen werden. In einem fünften Schritt können die Benutzer das Fahrzeug nutzen, d.h. etwa mit Hilfe einer Smartphone-Applikation das Fahrzeug öffnen, ihre Fahrstrecke überwachen, dazugehörige Mietkosten einsehen und die Miete beenden. Die Nutzer können nachfolgend über den ausgewählten Zahlungsdienstleister zahlen und beispielsweise Freunde über mobile Applikationen von sozialen Medien einladen.

Dabei kann die sog. CDIS-Box genutzt werden. Diese kann etwa genutzt werden, um das Fahrzeug zu öffnen und zu schließen, um das Fahrzeug zu mobilisieren und zu demobilisieren, und/oder um Zugriff auf den Komfort-Fahrzeugbus (K-CAN, Komfort-Controller Area Network, Kontroll-Netzwerk) zu bieten. Dabei kann die Vorgehensweise in zwei Teile aufgeteilt werden. In einem ersten Schritt kann das Smartphone genutzt werden, um das Fahrzeug von außen durch eine direkte Funkverbindung zwischen dem Smartphone und der CDIS-Box zu öffnen. In einem zweiten Schritt kann das Fahrzeug über das Smartphone gestartet werden. Dabei kommuniziert die CDIS-Box direkt (über Funk) mit dem Smartphone, mit einem Wegfahrsperrenmodul des Fahrzeugs, einem Schlüsselmodul des Fahrzeugs, um die Wegfahrsperre zu lösen, und über den K-CAN, um Fahrzeugdaten auszulesen.

Bei der Erfindung (Schlüsselchip mit Car on Demand Software) bzw. bei der CDIS Box handelt es sich um eine Car on Demand Telematik Nachrüstlösung, die den Nutzer dazu berechtigen kann, das Fahrzeug mittels eines Smartphones zu öffnen/schließen und zu mobilisieren. Einher geht damit auch das Authentifizieren und Sicherstellen der berechtigten Nutzung des Fahrzeugs. Ist dies gewährleistet lässt sich die Wegfahrsperre (WFS) deaktivieren und der Kunde kann das Fahrzeug nutzen. Zudem ist es möglich Fahrzeuginformationen auszulesen, die auf dem Komfort-CAN liegen und über ein Backend am Mobilen Endgerät (Smartphone) einzusehen.

Hierfür kann die Software eines herkömmlichen Schlüsselchips (etwa des Schlüsselchips 12) entsprechend angepasst werden, sodass die Signale (beispielsweise Öffnen/ Schließen bzw. Wegfahrsperre, durch das Schlüsselsignal und/oder das Wegfahrsperrensignal) vor der Prozessierung durch die CDIS Box verifiziert und nicht direkt ausgeführt werden. Dies stellt eine Alternative dazu da, das Fahrzeug über einen digitalen Schlüssel ohne mechanische Schlüsselvorrichtung zu Öffnen und zu nutzen, oder einen nicht verschlüsselten, vollfunktionsfähigen Fahrzeugschlüssel im Fahrzeuginneren vorzusehen.

Dies kann durch einen, auf der Platine integrierten und modifizierten Schlüsselchip ermöglicht werden. Dieser Chip kann eine modifizierte Variante des Schlüsselchips, der in einem konventionellen Fahrzeugschlüssel eingesetzt wird, sein. Die Softwaremodifizierung kann dabei den unerlaubten Zugriff auf das Wegfahrsperrengeheimnis und die Mobilisierung des Fahrzeugs verhindern. Die Vorteile dieses Konzepts ergeben sich aus der Modifizierung des Schlüsselchips, der auf der Platine integriert wird.

Somit ist in zumindest manchen Ausführungsbeispielen kein schreibender Zugriff auf den Fahrzeug-CAN notwendig. Es kann ein Schutz vor unberechtigter Nutzung bestehen, da der Schlüssel verschlüsselt ist, somit kann diese Lösung zudem Rechtskonform sein und den Vorgaben von Versicherungen entsprechen. Zudem kann Entwicklungsaufwand gespart werden, da ein bestehender Chip verwendet wird.

Im Folgenden wird eine beispielhafte Buchung des Fahrzeugs illustriert. In einem ersten Schritt registriert sich der Kunde im Backend (einem zentralen Rechner oder Rechenzentrum). In Schritt 2 bucht der Kunde das Fahrzeug an einem Backend eines Dritten, etwa eines Car-Sharing-Anbieters. In Schritt 3 wird der Buchungszeitraum von dem Backend des Dritten (etwa über eine Drahtloskommunikation) an ein Backend des Fahrzeugherstellers übermittelt. In Schritt 4 wird der Buchungszeitraum über das Smartphone (über eine Drahtloskommunikation) an die CDIS-Box übermittelt des Fahrzeugs übermittelt. In Schritt 5 öffnet der das Fahrzeug über das Smartphone über Bluetooth Low Energy (Niedrigenergie-Bluetooth). Die Fahrzeugdaten werden über Mobilfunk übermittelt. Die Hauptfunktionen, die dabei über die CDIS-Box bereitgestellt werden sind das Entriegeln/Verriegeln des Fahrzeugs, das Lösen der Wegfahrsperre, und der Zugriff auf Fahrzeugdaten über den Komfort-CAN.

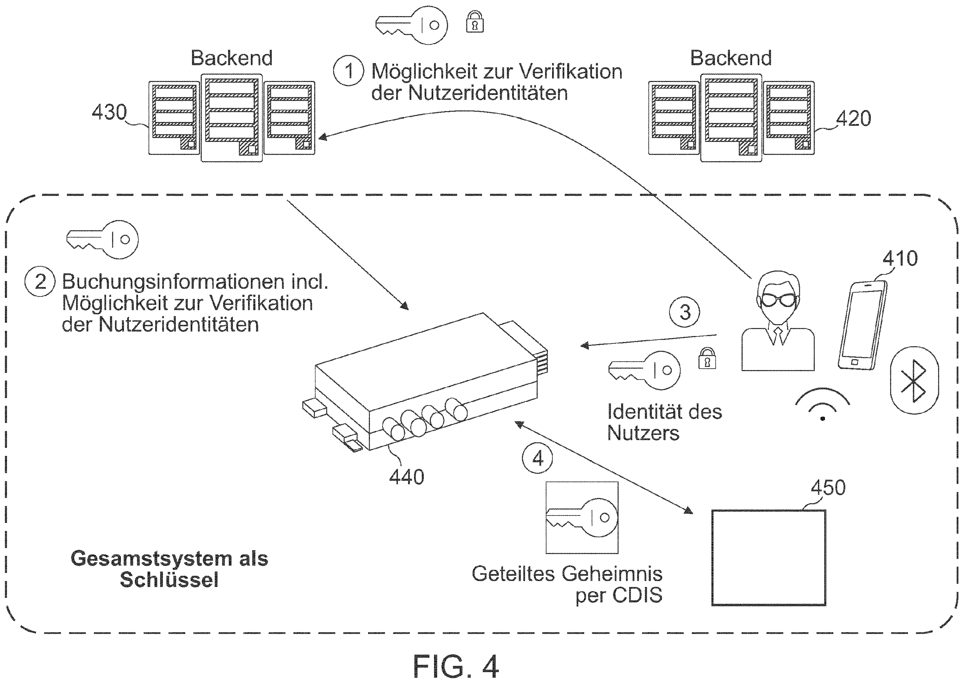

Dabei kann es Wünschenswert sein, dass der Fahrzeugschlüssel nicht im Fahrzeug ist. So kann in zumindest manchen Ausführungsbeispielen das Gesamtsystem aus CDIS-Box, Smartphone des Nutzers sowie den Backends des Herstellers und eines Anbieters des Car-Sharing den Schlüssel darstellen. Fig. 4 illustriert den Fluss der Informationen in einem solchen Gesamtsystem. So wird in einem ersten Schritt von einem Mobilgerät (Smartphone) 410 des Nutzers über das Backend des Dritten 420 an das Backend des Herstellers 430 (etwa den zentralen Rechner 200) eine Möglichkeit zur Verifikation der Nutzeridentitäten bereitgestellt. In Schritt 2 werden die Buchungsinformationen mit der Möglichkeit zur Verifikation der Nutzeridentitäten von dem Backend des Herstellers 430 an die CDIS-Box 440 (etwa die Vorrichtung 10) übermittelt. Die Identität (etwa die Identitätsinformation) des Nutzers wird in Schritt 3 von dem Mobilgerät 410 (etwa dem Mobilgerät 300) des Nutzers an die CDIS-Box übermittelt. Stimmt die Identität des Nutzers mit der Möglichkeit zur Verifikation der Nutzeridentitäten überein, so wird das geteilte Geheimnis (etwa den symmetrischen Schlüssel, K.Sym) des Schlüsselsignals und/oder des Wegfahrsperrensignals des Schlüsselchips 450 durch ein Steuersignal der CDIS-Box 440 freigegeben, um damit das Fahrzeug zu entriegeln und die Wegfahrsperre zu deaktivieren. Jeder Vorrichtung kann dabei einen öffentlichen und einen privaten Schlüssel umfassen, wobei der öffentliche Schlüssel den Kommunikationspartnern der Vorrichtung bekannt sein kann und der private Schlüssel nur der Vorrichtung selbst. Eine Kommunikation mit der Vorrichtung kann auf dem öffentlichen Schlüssel der Vorrichtung basieren.

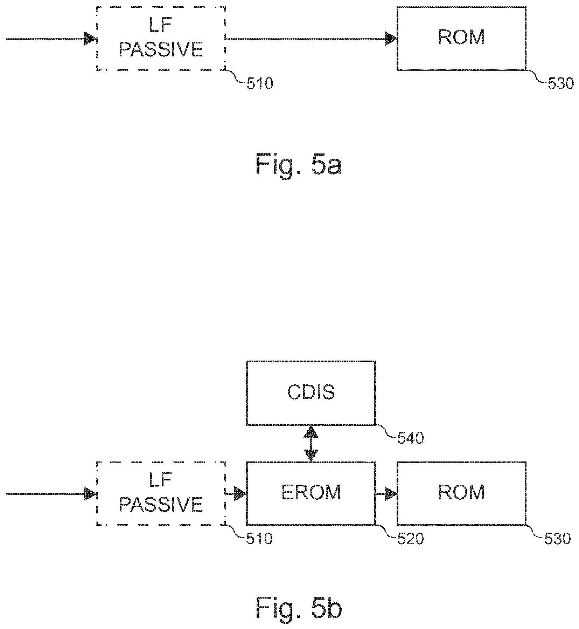

Die Figuren 5a und 5b zeigen, wie die heutige Lösung (konventioneller Fahrzeugschlüssel) und die Umsetzung mit der CDIS-Box im Falle eines Wegfahrsperrensignals realisiert wird. In beiden Fällen ist im ROM über die Firmware des Microcontrollers (Mikrosteuergerät, mit Herstellerspezifischen Sonderfunktionen) das Wegfahrsperren-Geheimnis gespeichert. Beim konventionellen Schlüssel wird ein LF-Signal, das die Aufforderung des Wegfahrsperrensystems umfasst, das Wegfahrsperrensignal bereitzustellen, über das Modul LF Passive 510 (Passiv-Niedrigfrequenzmodul) erhalten und direkt an das ROM weitergeleitet. Dort wird das Wegfahrsperrengeheimnis ausgelesen und dem Wegfahrsperrensystem bereitgestellt und die WFS löst sich. Bei der Umsetzung mit der CDIS-Box wird dieses LF-Signal über die LF Passive zuerst zum EROM (520) weitergeleitet. Dort wird geprüft, ob eine Freigabe für das Wegfahrsperrensignal vorliegt. Dabei erfolgt ein Signalweg zwischen EROM und CDIS-Box 540 (etwa dem Kontrollmodul 16 der Vorrichtung 10), die eine Überprüfung der Berechtigung der Entriegelungsanfrage durchführt. Ist die Freigabe zur Nutzung des Fahrzeugs erteilt, erfolgt eine Signalweiterleitung durch den EROM an den ROM, um das Wegfahrsperrengeheimnis auszulesen, wordurch eine Lösung der WFS analog zur konventionellen Lösung stattfindet.

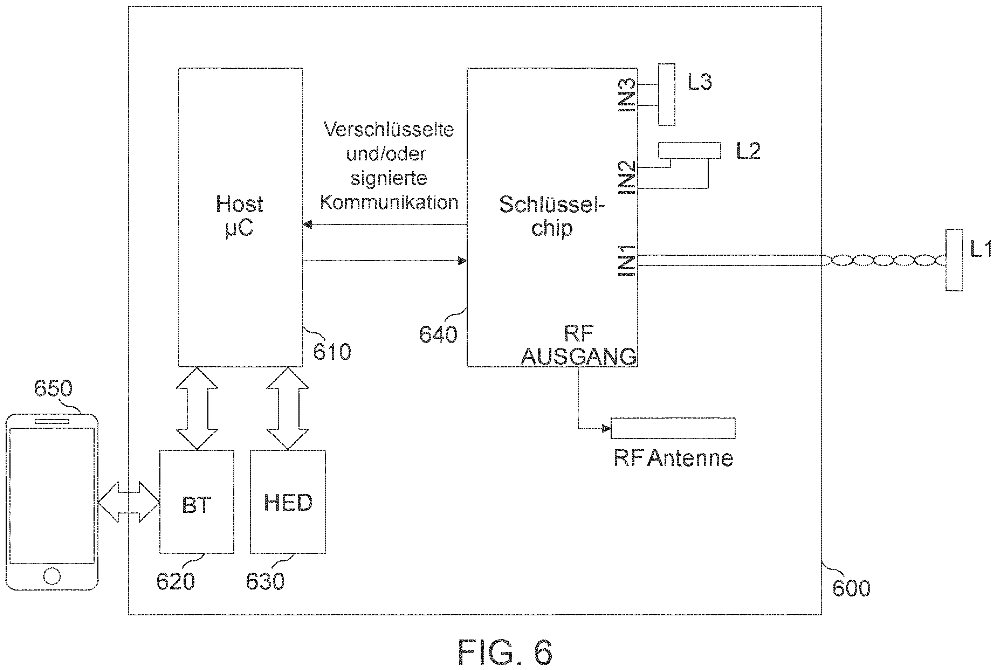

Fig. 6 zeigt die Integration des Schlüsselchips in der CDIS-Box 600. So kann die CDIS-Box den Host-Mikrocontroller 610 umfassen, das mit einem Bluetooth-Modul 620 (das ausgebildet sein kann, über Bluetooth oder Bluetooth Low Energy zu kommunizieren), einem Hardware Encryption Device 630 (HED, Hardware-Verschlüsselungsgerät, etwa einem Trusted Platfrom Module, Modul für eine vertrauenswürdige Plattform, oder einem Hardware Security Module, HSM, Hardware-Sicherheitsmodul) und dem Schlüsselchip 640 kommuniziert. Dabei kann der Host-Mikrocontroller, etwas zusammen mit dem TPM, dem Kontrollmodul 16 entsprechen, die zumindest eine Schnittstelle kann das Bluetooth-Modul 620 umfassen, und der Schlüsselchip 640 kann dem Schlüsselchip 12 entsprechen. Über das Bluetooth-Modul 620 kommuniziert der Mikrocontroller mit dem Mobilgerät 650 (das dem Mobilgerät 300 entsprechen kann). Der Schlüsselchip 640 ist beispielsweise über ein Serial Peripheral Interface (SPI, Serielle Peripherie-Schnittstelle) mit dem Mikrocontroller gekoppelt. Die Kommunikation zwischen Mikrocontroller und Schlüsselchip ist dabei verschlüsselt und/oder signiert. Ein Ziel ist eine sichere Kommunikation zwischen der Car on Demand Logik-Einheit und dem Schlüsselchip (Mobilisierungschip) zwecks Fahrzeugentriegelung und Mobilisierung zu realisieren. Damit können in manchen Ausführungsbeispielen Manipulationen wie ein unerwünschter Versand von Befehlen, eine unerwünschte Änderung von Befehlen oder eine Wiederholung der Befehle zum Schlüsselchip verhindert werden. Der Schlüsselchip ist mit drei Induktivitäten L1-L3 gekoppelt. Die Induktivitäten L2 und L3 sind im spezifischen Winkel zueinander angeordnet, und können für das schlüsselfreie Zugangssystem genutzt werden. L1 ist über ein Twisted Pair (engl. "verschlungenes Paar") Kabel von max. 3 Metern mit dem Schlüsselchip gekoppelt und außerhalb der CDIS-Box angeordnet.

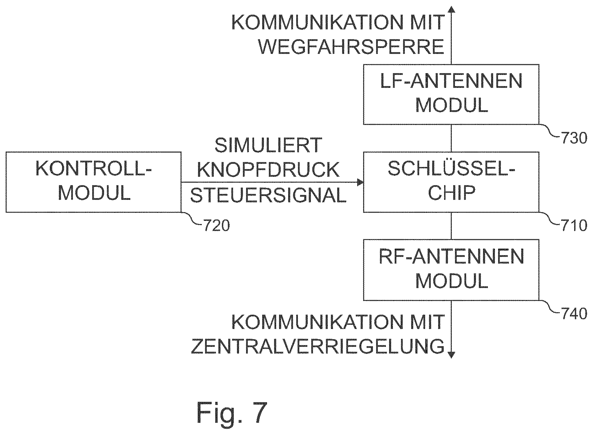

Fig. 7 zeigt ein Ausführungsbeispiel einer Anbindung eines Schlüsselchips 710 (etwa des Schlüsselchips 12). Der Schlüsselchip 710 ist mit einem Kontrollmodul 720 (etwa dem Kontrollmodul 16), einem LF-Antennenmodul 730 und einem RF-Antennenmodul 740 gekoppelt. Das Kontrollmodul löst Funktionen des Schlüsselchips über simulierte Knopfdrücke aus, und stellt ein Steuersignal bereit, damit der Schlüsselchip in die Lage versetzt wird, das Schlüsselsignal und/oder das Wegfahrsperrensignal bereitzustellen. Dabei wird das Schlüsselsignal über das RF-Antennenmodul 740, das zu einer Kommunikation mit der Zentralverriegelung ausgebildet ist, übertragen, und das Wegfahrsperrensignal wird über das LF-Antennenmodul 730, das zu einer Kommunikation mit der Wegfahrsperre ausgebildet ist, übertragen.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Schlüsselchip
- 14: Zumindest eine Schnittstelle
- 16: Kontrollmodul
- 20: Vorrichtung
- 22: Zumindest eine Schnittstelle
- 24: Kontrollmodul
- 30: Vorrichtung
- 32: Zumindest eine Schnittstelle
- 34: Kontrollmodul
- 100: Fahrzeug
- 110: Erhalten von Information über eine Freigabe eines Schlüsselsignals oder eines Wegfahrsperrensignals
- 120: Kommunizieren mit einem Mobilgerät
- 122: Erhalten einer Identitätsinformation
- 130: Bereitstellen eines Steuersignals
- 140: Bereitstellen eines Schlüsselsignals oder eines Wegfahrsperrensignals
- 150: Bereitstellen eines Zugriffs auf Funktionen einer Zentralverriegelung
- 160: Bereitstellen eines Zugriffs auf Funktionen einer elektrischen Wegfahrsperre
- 170: Bereitstellen von Daten eines Fahrzeugkommunikationssystems
- 200: Zentraler Rechner
- 210: Bereitstellen einer Information über eine Freigabe eines Schlüsselsignals oder eines Wegfahrsperrensignals
- 220: Bereitstellen eines verschlüsselten Tokens
- 300: Mobilgerät
- 310: Bereitstellen einer Identitätsinformation
- 320: Empfangen eines verschlüsselten Tokens
- 410: Mobilgerät
- 420: Backend eines Dritten
- 430: Backend eines Herstellers
- 440: CDIS-Box
- 450: Schlüsselchip
- 510: LF-Passive
- 520: EROM
- 530: ROM
- 540: CDIS-Box
- 600: CDIS-Box
- 610: Host-Mikrocontroller
- 620: Bluetooth-Modul
- 630: Schlüsselchip
- 640: TPM-Modul
- 710: Schlüsselchip
- 720: Kontrollmodul
- 730: LF-Antennenmodul
- 740: RF-Antennenmodul

## Patentansprüche

1. Verfahren für eine Vorrichtung (10) für ein Fahrzeug (100), wobei die Vorrichtung (10) einen Schlüsselchip (12) umfasst, das Verfahren umfassend:
Erhalten (110) von Information über eine Freigabe eines Schlüsselsignals oder eines Wegfahrsperrensignals von einem zentralen Rechner über ein drahtloses Mobilkommunikationssystem,
wobei die Freigabe des Schlüsselsignals eine Freigabe einer Funktionalität zur Entriegelung oder Verriegelung einer Zentralverriegelung des Fahrzeugs durch den zentralen Rechner indiziert,
und/oder wobei die Freigabe des Wegfahrsperrensignals eine Freigabe einer Funktionalität zur Deaktivierung oder Aktivierung einer Wegfahrsperre durch den zentralen Rechner indiziert,
wobei die Information über die Freigabe des Schlüsselsignals Information über einen Nutzer umfasst, für den das Schlüsselsignal und/oder das Wegfahrsperrensignal freigegeben werden soll;
Erhalten (122) einer Identitätsinformation eines Nutzers des Fahrzeugs von einem Mobilgerät des Nutzers über eine weitere drahtlose Kommunikationsverbindung;
Bereitstellen (130) eines Steuersignals für den Schlüsselchip (12) basierend auf der Information über die Freigabe des Schlüsselsignals oder des Wegfahrsperrensignals, wobei das Steuersignal dazu ausgebildet ist, es dem Schlüsselchip zu ermöglichen, das Schlüsselsignal oder das Wegfahrsperrensignal zu generieren, wobei das Steuersignal bereitgestellt (130) wird, falls die Information über den Nutzer mit der Identitätsinformation übereinstimmt; und
Bereitstellen (140), durch den Schlüsselchip, des Schlüsselsignals und/oder des Wegfahrsperrensignals über eine Drahtlos-Kommunikationsverbindung für ein Zentralverriegelungssystem (50) und/oder ein Wegfahrsperrensystem (40) des Fahrzeugs nach Erhalt des Steuersignals.

2. Das Verfahren gemäß Anspruch 1, wobei das Schlüsselsignal über eine drahtlose Hochfrequenz-Kommunikationsverbindung übertragen wird
und/oder wobei das Wegfahrsperrensignal über eine drahtlose Niedrigfrequenz-Kommunikationsverbindung übertragen wird.

3. Das Verfahren gemäß einem der vorhergehenden Ansprüche, wobei das Schlüsselsignal gleichartig zu einem drahtlosen Schlüsselsignal eines Fahrzeugschlüssels des Fahrzeugs ist,
und/oder wobei das Wegfahrsperrensignal gleichartig zu einem drahtlosen Wegfahrsperrensignal des Fahrzeugschlüssels des Fahrzeugs ist,
und/oder wobei der Schlüsselchip gleichartig zu einem Schlüsselchip eines Fahrzeugschlüssels des Fahrzeugs ist.

4. Das Verfahren gemäß einem der vorhergehenden Ansprüche, wobei die Information über die Freigabe des Schlüsselsignals Information über eine Zeitspanne umfasst, für die die Freigabe des Schlüsselsignals und/oder des Wegfahrsperrensignals erteilt wird, wobei das Steuersignal innerhalb der Zeitspanne bereitgestellt wird,
und/oder wobei die Information über die Freigabe des Schlüsselsignals eine kryptografische Schlüsselinformation umfasst, wobei die Identitätsinformation einem verschlüsselten Token entspricht, wobei das verschlüsselte Token von dem zentralen Rechner stammt, wobei das Verfahren ferner ein Verifizieren des verschlüsselten Tokens basierend auf der kryptografischen Schlüsselinformation umfasst.

5. Das Verfahren gemäß einem der vorhergehenden Ansprüche, wobei das Verfahren ferner ein Kommunizieren (120) mit einem Mobilgerät des Nutzers über eine weitere drahtlose Kommunikationsverbindung umfasst,
wobei das Verfahren ein Bereitstellen (150) eines Zugriffs auf Funktionen der Zentralverriegelung für das Mobilgerät basierend auf der Information über die Freigabe des Schlüsselsignals umfasst,
und/oder wobei das Verfahren ein Bereitstellen (160) eines Zugriffs auf Funktionen einer elektrischen Wegfahrsperre für das Mobilgerät basierend auf der Information über die Freigabe des Wegfahrsperrensignals umfasst,
und/oder wobei das Verfahren ein Bereitstellen (170) von Daten eines Fahrzeugkommunikationssystems des Fahrzeugs für das Mobilgerät umfasst.

6. Das Verfahren gemäß einem der vorhergehenden Ansprüche, wobei das
Wegfahrsperrensignal dem Wegfahrsperrensystem (40) des Fahrzeugs bereitgestellt (140) wird, um eine Wegfahrsperre des Fahrzeugs zu deaktivieren,
und/oder wobei das Schlüsselsignal dem Zentralverriegelungssystem (50) des Fahrzeugs bereitgestellt (140) wird, um zumindest eine Klappe des Fahrzeugs zu Entoder Verriegeln,
und/oder wobei das Wegfahrsperrensignal dem Wegfahrsperrensystem (40) des Fahrzeugs bereitgestellt (140) wird, um ein Starten des Fahrzeugs zu ermöglichen.

7. Das Verfahren gemäß einem der vorhergehenden Ansprüche, wobei das Steuersignal kryptografisch gesichert bereitgestellt wird.

8. Verfahren für einen zentralen Rechner (200), das Verfahren umfassend:
Bereitstellen (210) einer Information über eine Freigabe eines Schlüsselsignals oder eines Wegfahrsperrensignals für eine Vorrichtung eines Fahrzeugs über ein drahtloses Mobilkommunikationssystem,
wobei die Freigabe des Schlüsselsignals eine Freigabe einer Funktionalität zur Entriegelung oder Verriegelung einer Zentralverriegelung des Fahrzeugs durch den zentralen Rechner indiziert,
und/oder wobei die Freigabe des Wegfahrsperrensignals eine Freigabe einer Funktionalität zur Deaktivierung oder Aktivierung einer Wegfahrsperre durch den zentralen Rechner indiziert,
wobei sich die Freigabe auf ein Schlüsselsignal oder ein Wegfahrsperrensignal bezieht, das über eine Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist,
wobei die Information über die Freigabe des Schlüsselsignals Information über einen Nutzer umfasst, für den das Schlüsselsignal und/oder das Wegfahrsperrensignal freigegeben werden soll.

9. Das Verfahren gemäß Anspruch 8, wobei die Information über die Freigabe des Schlüsselsignals oder des Wegfahrsperrensignals eine kryptografische Schlüsselinformation umfasst, wobei das Verfahren ferner ein Bereitstellen (220) eines verschlüsselten Tokens für ein Mobilgerät eines Nutzers des Fahrzeugs umfasst, wobei das verschlüsselte Token und die kryptografische Schlüsselinformation auf demselben kryptografischen Schlüssel basieren, und wobei das verschlüsselte Token dem Mobilgerät zur Weitergabe an die Vorrichtung des Fahrzeugs bereitgestellt wird.

10. Computerprogramm zur Durchführung eines der Verfahren nach einem der Ansprüche 1 bis 9, wenn das Computerprogramm auf einem Computer, einem Prozessor, oder einer programmierbaren Hardwarekomponente abläuft.

11. Vorrichtung (10) für ein Fahrzeug (100), die Vorrichtung (10) umfassend:
ein Schlüsselchip (12);
zumindest eine Schnittstelle (14), ausgebildet zur Kommunikation über ein drahtloses Mobilkommunikationssystem; und
ein Kontrollmodul (16), ausgebildet zum:
Erhalten von Information über eine Freigabe eines Schlüsselsignals oder eines Wegfahrsperrensignals von einem zentralen Rechner (200) über das drahtlose Mobilkommunikationssystem,
wobei die Freigabe des Schlüsselsignals eine Freigabe einer Funktionalität zur Entriegelung oder Verriegelung einer Zentralverriegelung des Fahrzeugs durch den zentralen Rechner indiziert,
und/oder wobei die Freigabe des Wegfahrsperrensignals eine Freigabe einer Funktionalität zur Deaktivierung oder Aktivierung einer Wegfahrsperre durch den zentralen Rechner indiziert,
wobei die Information über die Freigabe des Schlüsselsignals Information über einen Nutzer umfasst, für den das Schlüsselsignal und/oder das Wegfahrsperrensignal freigegeben werden soll,
Erhalten einer Identitätsinformation eines Nutzers des Fahrzeugs von einem Mobilgerät des Nutzers über eine weitere drahtlose Kommunikationsverbindung, und
Bereitstellen eines Steuersignals für den Schlüsselchip (12) basierend auf der Information über die Freigabe des Schlüsselsignals oder des Wegfahrsperrensignals,
wobei das Steuersignal dazu ausgebildet ist, es dem Schlüsselchip zu ermöglichen, das Schlüsselsignal oder das Wegfahrsperrensignal zu generieren, wobei das Steuersignal bereitgestellt (130) wird, falls die Information über den Nutzer mit der Identitätsinformation übereinstimmt,
wobei der Schlüsselchip (12) ausgebildet ist, das Schlüsselsignal und/oder das Wegfahrsperrensignal über eine Drahtlos-Kommunikationsverbindung für ein Zentralverriegelungssystem (50) und/oder ein Wegfahrsperrensystem (40) des Fahrzeugs (120) nach Erhalt des Steuersignals bereitzustellen.

12. Vorrichtung (20) für einen zentralen Rechner (200), die Vorrichtung (20) umfassend:
zumindest eine Schnittstelle (22), ausgebildet zur Kommunikation über ein drahtloses Mobilkommunikationssystem; und
ein Kontrollmodul (24), ausgebildet zum:
Bereitstellen einer Information über eine Freigabe eines Schlüsselsignals oder eines Wegfahrsperrensignals für eine Vorrichtung (10) eines Fahrzeugs über das drahtlose Mobilkommunikationssystem,
wobei die Freigabe des Schlüsselsignals eine Freigabe einer Funktionalität zur Entriegelung oder Verriegelung einer Zentralverriegelung des Fahrzeugs durch den zentralen Rechner indiziert,
und/oder wobei die Freigabe des Wegfahrsperrensignals eine Freigabe einer Funktionalität zur Deaktivierung oder Aktivierung einer Wegfahrsperre durch den zentralen Rechner indiziert,
wobei sich die Freigabe auf ein Schlüsselsignal oder ein Wegfahrsperrensignal bezieht,
das über eine Drahtlos-Kommunikationsverbindung innerhalb des Fahrzeugs einem Wegfahrsperrenmodul oder einem Zentralverriegelungssystem des Fahrzeugs bereitgestellt wird, falls das Schlüsselsignal oder das Wegfahrsperrensignal von dem zentralen Rechner freigegeben ist,
wobei die Information über die Freigabe des Schlüsselsignals Information über einen Nutzer umfasst, für den das Schlüsselsignal und/oder das Wegfahrsperrensignal freigegeben werden soll.

## Claims

1. A method for a device (10) for a vehicle (100), wherein the device (10) comprises a key chip (12), the method comprising:
obtaining (110) information about a release of a key signal or an immobilizer signal from a central computer via a wireless mobile communication system,
wherein the release of the key signal indicates a release, by the central computer, of a functionality for unlocking or locking central locking of the vehicle,
and/or wherein the release of the immobilizer signal indicates a release, by the central computer, of a functionality for deactivating or activating an immobilizer,
wherein the information about the release of the key signal comprises information about a user for whom the key signal and/or the immobilizer signal is to be released;
obtaining (122) identity information of a user of the vehicle from a mobile device of the user via another wireless communication link;
providing (130) a control signal for the key chip (12) based on the information about the release of the key signal or the immobilizer signal, wherein the control signal is designed to enable the key chip to generate the key signal or the immobilizer signal, wherein the control signal is provided (130) if the information about the user matches the identity information; and
by means of the key chip, providing (140) the key signal and/or the immobilizer signal via a wireless communication link for a central locking system (50) and/or an immobilizer system (40) of the vehicle after the control signal has been obtained.

2. The method according to claim 1, wherein the key signal is transmitted via a wireless high-frequency communication link and/or wherein the immobilizer signal is transmitted via a wireless low-frequency communication link.

3. The method according to one of the preceding claims, wherein the key signal is similar to a wireless key signal of a vehicle key of the vehicle,
and/or wherein the immobilizer signal is similar to a wireless immobilizer signal of the vehicle key of the vehicle, and/or wherein the key chip is similar to a key chip of a vehicle key of the vehicle.

4. The method according to one of the preceding claims, wherein the information about the release of the key signal comprises information about a time period for which the release of the key signal and/or the immobilizer signal is granted, wherein the control signal is provided within the time period, and/or wherein the information about the release of the key signal comprises cryptographic key information, wherein the identity information corresponds to an encrypted token, wherein the encrypted token originates from the central computer, wherein the method further comprises verifying the encrypted token based on the cryptographic key information.

5. The method according to one of the preceding claims, wherein the method further comprises communicating (120) with a mobile device of the user via a further wireless communication link,
wherein the method comprises providing (150) access to functions of the central locking for the mobile device based on the information about the release of the key signal,
and/or wherein the method comprises providing (160) access to functions of an electric immobilizer for the mobile device based on the information about the release of the immobilizer signal,
and/or wherein the method comprises providing (170) data of a vehicle communication system of the vehicle for the mobile device.

6. The method according to one of the preceding claims, wherein the immobilizer signal is provided (140) to the immobilizer system (40) of the vehicle in order to deactivate an immobilizer of the vehicle,
and/or wherein the key signal is provided (140) to the central locking system (50) of the vehicle in order to unlock or lock at least one panel of the vehicle,
and/or wherein the immobilizer signal is provided (140) to the immobilizer system (40) of the vehicle to enable the vehicle to start.

7. The method according to one of the preceding claims, wherein the control signal is provided in a cryptographically secured manner.

8. A method for a central computer (200), the method comprising:
providing (210) information about a release of a key signal or an immobilizer signal for a device of a vehicle via a wireless mobile communication system,
wherein the release of the key signal indicates a release, by the central computer, of a functionality for unlocking or locking central locking of the vehicle,
and/or wherein the release of the immobilizer signal indicates a release, by the central computer, of a functionality for deactivating or activating an immobilizer,
wherein the release refers to a key signal or an immobilizer signal provided via a wireless communication link within the vehicle to an immobilizer module or a central locking system of the vehicle if the key signal or the immobilizer signal is released by the central computer,
wherein the information about the release of the key signal comprises information about a user for whom the key signal and/or the immobilizer signal is to be released.

9. The method according to claim 8, wherein the information about the release of the key signal or the immobilizer signal comprises cryptographic key information, wherein the method further comprises providing (220) an encrypted token for a mobile device of a user of the vehicle, wherein the encrypted token and the cryptographic key information are based on the same cryptographic key, and the encrypted token is provided to the mobile device in order to forward said token to the device of the vehicle.

10. A computer program for carrying out one of the methods according to one of claims 1 to 9 when the computer program runs on a computer, a processor, or a programmable hardware component.

11. A device (10) for a vehicle (100), the device (10) comprising:
a key chip (12);
at least one interface (14) designed for communication via a wireless mobile communication system; and
a control module (16) designed to:
obtain information about a release of a key signal or an immobilizer signal from a central computer (200) via the wireless mobile communication system,
wherein the release of the key signal indicates a release, by the central computer, of a functionality for unlocking or locking central locking of the vehicle,
and/or wherein the release of the immobilizer signal indicates a release, by the central computer, of a functionality for deactivating or activating an immobilizer,
wherein the information about the release of the key signal comprises information about a user for whom the key signal and/or the immobilizer signal is to be released,
obtain identity information of a user of the vehicle from a mobile device of the user via a further wireless communication link, and providing a control signal for the key chip (12) based on the information about the release of the key signal or the immobilizer signal, wherein the control signal is designed to enable the key chip to generate the key signal or the immobilizer signal, wherein the control signal is provided (130) if the information about the user matches the identity information,
wherein the key chip (12) is designed to provide the key signal and/or the immobilizer signal via a wireless communication link for a central locking system (50) and/or an immobilizer system (40) of the vehicle (120) after the control signal has been received.

12. A device (20) for a central computer (200), the device (20) comprising:
at least one interface (22) designed for communication via a wireless mobile communication system; and
a control module (24) designed to:
provide information about a release of a key signal or an immobilizer signal for a device (10) of a vehicle via the wireless mobile communication system,
wherein the release of the key signal indicates a release, by the central computer, of a functionality for unlocking or locking central locking of the vehicle,
and/or wherein the release of the immobilizer signal indicates a release, by the central computer, of a functionality for deactivating or activating an immobilizer,
wherein the release refers to a key signal or an immobilizer signal provided via a wireless communication link within the vehicle to an immobilizer module or a central locking system of the vehicle if the key signal or the immobilizer signal is released by the central computer,
wherein the information about the release of the key signal comprises information about a user for whom the key signal and/or the immobilizer signal is to be released.

## Revendications

1. Procédé pour un dispositif (10) pour un véhicule (100), dans lequel le dispositif (10) comprend une puce de clé (12), le procédé comprenant :
l'obtention (110) d'une information concernant une libération d'un signal de clé ou d'un signal d'immobilisation de véhicule à partir d'un ordinateur central par l'intermédiaire d'un système de communication mobile sans fil,
dans lequel la libération du signal de clé indique une libération d'une fonctionnalité de déverrouillage ou de verrouillage d'un verrouillage central du véhicule par l'ordinateur central,
et/ou dans lequel la libération du signal d'immobilisation de véhicule indique une libération d'une fonctionnalité de désactivation ou d'activation d'un élément d'immobilisation de véhicule par l'ordinateur central,
dans lequel l'information concernant la libération du signal de clé comprend une information concernant un utilisateur pour lequel le signal de clé et/ou le signal d'immobilisation de véhicule doivent être libérés ;
l'obtention (122) d'une information d'identité d'un utilisateur du véhicule à partir d'un appareil mobile de l'utilisateur par l'intermédiaire d'une autre connexion de communication sans fil ;
la fourniture (130) d'un signal de commande à la puce de clé (12) sur la base de l'information concernant la libération du signal de clé ou du signal d'immobilisation de véhicule, dans lequel le signal de commande est configuré pour permettre à la puce de clé de générer le signal de clé ou le signal d'immobilisation de véhicule, dans lequel le signal de commande est fourni (130) si l'information concernant l'utilisateur correspond à l'information d'identité ; et
la fourniture (140), par la puce de clé, du signal de clé et/ou du signal d'immobilisation de véhicule par l'intermédiaire d'une connexion de communication sans fil à un système de verrouillage central (50) et/ou à un système d'immobilisation de véhicule (40) du véhicule après obtention du signal de commande.

2. Procédé selon la revendication 1, dans lequel le signal de clé est transmis par l'intermédiaire d'une connexion de communication sans fil à haute fréquence et/ou dans lequel le signal d'immobilisation de véhicule est transmis par l'intermédiaire d'une connexion de communication sans fil à basse fréquence.

3. Procédé selon l'une des revendications précédentes, dans lequel le signal de clé est similaire à un signal de clé sans fil d'une clé de véhicule du véhicule,
et/ou dans lequel le signal d'immobilisation de véhicule est similaire à un signal d'immobilisation de véhicule sans fil de la clé de véhicule du véhicule, et/ou dans lequel la puce de clé est similaire à une puce de clé d'une clé de véhicule du véhicule.

4. Procédé selon l'une des revendications précédentes, dans lequel l'information concernant la libération du signal de clé comprend une information concernant une période pendant laquelle la libération du signal de clé et/ou du signal d'immobilisation de véhicule est accordée, dans lequel le signal de commande est fourni pendant la période, et/ou dans lequel l'information concernant la libération du signal de clé comprend une information de clé cryptographique, dans lequel l'information d'identité correspond à un jeton chiffré, dans lequel le jeton chiffré provient de l'ordinateur central, dans lequel le procédé comprend en outre une vérification du jeton chiffré sur la base de l'information de clé cryptographique.

5. Procédé selon l'une des revendications précédentes, dans lequel le procédé comprend en outre une communication (120) avec un appareil mobile de l'utilisateur par l'intermédiaire d'une autre connexion de communication sans fil,
dans lequel le procédé comprend une fourniture (150) à l'appareil mobile d'un accès à des fonctions du verrouillage central sur la base de l'information concernant la libération du signal de clé,
et/ou dans lequel le procédé comprend une fourniture (160) à l'appareil mobile d'un accès à des fonctions d'un élément d'immobilisation de véhicule électrique sur la base de l'information concernant la libération du signal d'immobilisation de véhicule, et/ou dans lequel le procédé comprend une fourniture (170) à l'appareil mobile de données d'un système de communication de véhicule du véhicule.

6. Procédé selon l'une des revendications précédentes, dans lequel le signal d'immobilisation de véhicule est fourni (140) au système d'immobilisation de véhicule (40) du véhicule afin de désactiver un élément d'immobilisation de véhicule du véhicule,
et/ou dans lequel le signal de clé est fourni (140) au système de verrouillage central (50) du véhicule afin de déverrouiller ou verrouiller au moins un hayon du véhicule,
et/ou dans lequel le signal d'immobilisation de véhicule est fourni (140) au système d'immobilisation de véhicule (40) du véhicule afin de permettre un démarrage du véhicule.

7. Procédé selon l'une des revendications précédentes, dans lequel le signal de commande est fourni de manière sécurisée par cryptographie.

8. Procédé pour un ordinateur central (200), le procédé comprenant :
la fourniture (210) d'une information concernant une libération d'un signal de clé ou d'un signal d'immobilisation de véhicule pour un dispositif d'un véhicule par l'intermédiaire d'un système de communication mobile sans fil,
dans lequel la libération du signal de clé indique une libération d'une fonctionnalité de déverrouillage ou de verrouillage d'un verrouillage central du véhicule par l'ordinateur central,
et/ou dans lequel la libération du signal d'immobilisation de véhicule indique une libération d'une fonctionnalité de désactivation ou d'activation d'un élément d'immobilisation de véhicule par l'ordinateur central,
dans lequel la libération se rapporte à un signal de clé ou à un signal d'immobilisation de véhicule fourni à un module d'immobilisation de véhicule ou à un système de verrouillage central du véhicule par l'intermédiaire d'une connexion de communication sans fil à l'intérieur du véhicule si le signal de clé ou le signal d'immobilisation de véhicule est libéré par l'ordinateur central,
dans lequel l'information concernant la libération du signal de clé comprend une information concernant un utilisateur pour lequel le signal de clé et/ou le signal d'immobilisation de véhicule doivent être libérés.

9. Procédé selon la revendication 8, dans lequel l'information concernant la libération du signal de clé ou du signal d'immobilisation de véhicule comprend une information de clé cryptographique, dans lequel le procédé comprend en outre une fourniture (220) d'un jeton chiffré à un appareil mobile d'un utilisateur du véhicule, dans lequel le jeton chiffré et l'information de clé cryptographique sont basés sur la même clé cryptographique, et dans lequel le jeton chiffré est fourni à l'appareil mobile pour être transmis au dispositif du véhicule.

10. Programme informatique pour la réalisation d'un des procédés selon l'une des revendications 1 à 9, lorsque le programme informatique est exécuté sur un ordinateur, un processeur ou un composant matériel programmable.

11. Dispositif (10) pour un véhicule (100), le dispositif (10) comprenant :
une puce de clé (12) ;
au moins une interface (14) configurée pour permettre la communication par l'intermédiaire d'un système de communication mobile sans fil ; et
un module de contrôle (16) configuré pour :
obtenir une information concernant une libération d'un signal de clé ou d'un signal d'immobilisation de véhicule à partir d'un ordinateur central (200) par l'intermédiaire du système de communication mobile sans fil,
dans lequel la libération du signal de clé indique une libération d'une fonctionnalité de déverrouillage ou de verrouillage d'un verrouillage central du véhicule par l'ordinateur central,
et/ou dans lequel la libération du signal d'immobilisation de véhicule indique une libération d'une fonctionnalité de désactivation ou d'activation d'un élément d'immobilisation de véhicule par l'ordinateur central,
dans lequel l'information concernant la libération du signal de clé comprend une information concernant un utilisateur pour lequel le signal de clé et/ou le signal d'immobilisation de véhicule doivent être libérés,
obtenir une information d'identité d'un utilisateur du véhicule à partir d'un appareil mobile de l'utilisateur par l'intermédiaire d'une autre connexion de communication sans fil, et fournir un signal de commande à la puce de clé (12) sur la base de l'information concernant la libération du signal de clé ou du signal d'immobilisation de véhicule, dans lequel le signal de commande est configuré pour permettre à la puce de clé de générer le signal de clé ou le signal d'immobilisation de véhicule, dans lequel le signal de commande est fourni (130) si l'information concernant l'utilisateur correspond à l'information d'identité,
dans lequel la puce de clé (12) est configurée pour fournir le signal de clé et/ou le signal d'immobilisation de véhicule à un système de verrouillage central (50) et/ou à un système d'immobilisation de véhicule (40) du véhicule (120) par l'intermédiaire d'une connexion de communication sans fil après obtention du signal de commande.

12. Dispositif (20) pour un ordinateur central (200), le dispositif (20) comprenant :
au moins une interface (22) configurée pour permettre la communication par l'intermédiaire d'un système de communication mobile sans fil ; et
un module de contrôle (24) configuré pour :
fournir une information concernant une libération d'un signal de clé ou d'un signal d'immobilisation de véhicule pour un dispositif (10) d'un véhicule par l'intermédiaire du système de communication mobile sans fil,
dans lequel la libération du signal de clé indique une libération d'une fonctionnalité de déverrouillage ou de verrouillage d'un verrouillage central du véhicule par l'ordinateur central,
et/ou dans lequel la libération du signal d'immobilisation de véhicule indique une libération d'une fonctionnalité de désactivation ou d'activation d'un élément d'immobilisation de véhicule par l'ordinateur central,
dans lequel la libération se rapporte à un signal de clé ou à un signal d'immobilisation de véhicule fourni à un module d'immobilisation de véhicule ou à un système de verrouillage central du véhicule par l'intermédiaire d'une connexion de communication sans fil à l'intérieur du véhicule si le signal de clé ou le signal d'immobilisation de véhicule est libéré par l'ordinateur central,
dans lequel l'information concernant la libération du signal de clé comprend une information concernant un utilisateur pour lequel le signal de clé et/ou le signal d'immobilisation de véhicule doivent être libérés.
